(19) Europäisches Patentamt
European Patent Office
Office européen des brevets

(11) EP 4 027 271 A1

(12) EUROPEAN PATENT APPLICATION

(43) Date of publication:
**13.07.2022 Bulletin 2022/28**

(21) Application number: **21199102.1**

(22) Date of filing: **27.09.2021**

(51) International Patent Classification (IPC):
**G06N 3/12** $^{(2006.01)}$

(52) Cooperative Patent Classification (CPC):
**G06N 3/126**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.01.2021 JP 2021001025**

(71) Applicant: **FUJITSU LIMITED**
**Kanagawa 211-8588 (JP)**

(72) Inventors:
• **MARUO, Akito**
  **Kanagawa, 211-8588 (JP)**
• **SOEDA, Takeshi**
  **Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING APPARATUS, INFORMATION PROCESSING METHOD, AND INFORMATION PROCESSING PROGRAM**

(57) An information processing method for causing a computer to perform multi-objective optimization, the information processing method includes: obtaining, by a multi-objective optimization method, a Pareto solution set from a model generated based on data for each of a plurality of objective functions regarding the multi-objective optimization; and updating the model by using a Pareto solution from among the obtained Pareto solution set, the Pareto solution being a solution that has a relatively large variance of values of the objective function in the model.

FIG. 4

INFORMATION PROCESSING APPARATUS — 100

| CONTROL UNIT 101 | MAIN STORAGE DEVICE 102 | AUXILIARY STORAGE DEVICE 103 | I/O INTERFACE 104 |

— 109

| COMMUNICATION INTERFACE 105 | INPUT DEVICE 106 | OUTPUT DEVICE 107 | DISPLAY DEVICE 108 |

EP 4 027 271 A1

**Description**

FIELD

The present case relates to an information processing apparatus, an information processing method, and an information processing program.

BACKGROUND

In a scene of device design or the like, there are some cases where two contradictory objectives are desired to be achieved, for example, an objective of improving performance of a device and an objective of reducing manufacturing cost of the device.

In a case of performing multi-objective optimization that attempts to simultaneously optimize a plurality of objectives (objects to be optimized), when there is a tradeoff relationship between these objectives, there is usually no only one optimal solution. Instead, a "Pareto solution set" is a candidate for the optimal solution. Here, the "Pareto solution set" means a set of solutions in which if one objective is to be improved, the other objective must be aggravated.

As an existing technique for performing multi-objective optimization, for example, a technique of obtaining a plurality of design values in a plurality of configuration elements, using Bayesian optimization of multi-point search using a plurality of request items as objective variables and the configuration elements as explanatory variables, has been proposed.

Furthermore, as another existing technique for performing multi-objective optimization, for example, a "multi-objective genetic algorithm" in which a genetic algorithm is applied to multi-objective optimization has been proposed.

Here, the existing technique using the multi-objective genetic algorithm needs to perform an analysis such as an experiment or a simulation for each individual generated by the multi-objective genetic algorithm when evaluating the individual, for example. Therefore, the existing technique using the multi-objective genetic algorithm has a problem that a huge number of analyses is needed according to the number of generations of individuals generated by the multi-objective genetic algorithm and the number of individuals generated in each generation, for example.

Examples of the related art include as follows: Japanese Laid-open Patent Publication No. 2020-52737 and K. Deb, A. Pratap, S. Agarwal and T. Meyarivan, 'A fast and elitist multiobjective genetic algorithm: NSGA-II,' in IEEE Transactions on Evolutionary Computation, vol. 6, no. 2, pp. 182-197, April 2002, doi: 10.1109/4235.996017.

SUMMARY

TECHNICAL PROBLEM

In one aspect, an objective of the present case is to provide an information processing apparatus and the like capable of reducing the number of analyses in multi-objective optimization.

SOLUTION TO PROBLEM

According to an aspect of the embodiments, there is provided an information processing method for causing a computer to perform multi-objective optimization. In an example, the information processing method includes: obtaining, by a multi-objective optimization method, a Pareto solution set from a model generated based on data for each of a plurality of objective functions regarding the multi-objective optimization; and updating the model by using a Pareto solution from among the obtained Pareto solution set, the Pareto solution being a solution that has a relatively large variance of values of the objective function in the model.

ADVANTAGEOUS EFFECTS OF INVENTION

In one aspect, the present case can provide an information processing apparatus and the like capable of reducing the number of analyses in multi-objective optimization.

BRIEF DESCRIPTION OF DRAWINGS

FIG. 1 is a diagram illustrating an example of a Pareto solution set in multi-objective optimization;
FIG. 2 is a flowchart illustrating an example of a flow of multi-objective optimization using a multi-objective genetic algorithm in an existing technique;

FIG. 3 is a diagram illustrating an example of a Gaussian process regression model;

FIG. 4 is a diagram illustrating an example of a hardware configuration of an information processing apparatus disclosed in the present case;

FIG. 5 is a diagram illustrating another example of the hardware configuration of the information processing apparatus disclosed in the present case;

FIG. 6 is a diagram illustrating an example of a functional configuration of the information processing apparatus disclosed in the present case;

FIG. 7 is a flowchart illustrating an example of a flow when updating a model to perform multi-objective optimization, using an example of the technique disclosed in the present case;

FIG. 8 is a diagram illustrating an example of a calculation system when optimizing the shape of a magnetic shield in the present embodiment;

FIG. 9A is a diagram illustrating an example of a distribution of a mean and learning data in a Gaussian process regression model obtained by Bayesian optimization for an objective function $F_1$;

FIG. 9B is a diagram illustrating an example of a distribution of a mean and learning data in a Gaussian process regression model obtained by Bayesian optimization for an objective function $F_2$;

FIG. 10A is a diagram illustrating an example of a distribution of a variance and learning data in the Gaussian process regression model obtained by Bayesian optimization for the objective function $F_1$;

FIG. 10B is a diagram illustrating an example of a distribution of a variance and learning data in the Gaussian process regression model obtained by Bayesian optimization for the objective function $F_2$;

FIG. 11 is a diagram illustrating an example of a Pareto solution set obtained by first multi-objective optimization by "NSGA II" and specified recommendation points;

FIG. 12 is a diagram illustrating an example of a Pareto solution set obtained by second multi-objective optimization by "NSGA II" and specified recommendation points;

FIG. 13 is a diagram illustrating an example of a Pareto solution set obtained by third multi-objective optimization by "NSGA II" and specified recommendation points;

FIG. 14 is a diagram illustrating an example of a Pareto solution set obtained by fourth multi-objective optimization by "NSGA II" and specified recommendation points;

FIG. 15 is a diagram illustrating an example of a Pareto solution set obtained by fifth multi-objective optimization by "NSGA II" and specified recommendation points;

FIG. 16 is a diagram illustrating an example of a Pareto solution set obtained by twentieth multi-objective optimization by "NSGA II";

FIG. 17 is a diagram illustrating an example of the distribution of the mean and the learning data in the Gaussian process regression model for the objective function $F_1$ in an initial state (Bayesian optimization);

FIG. 18 is a diagram illustrating an example of the distribution of the mean and the learning data in the Gaussian process regression model for the objective function $F_1$ in the first time;

FIG. 19 is a diagram illustrating an example of the distribution of the mean and the learning data in the Gaussian process regression model for the objective function $F_1$ in the second time;

FIG. 20 is a diagram illustrating an example of the distribution of the mean and the learning data in the Gaussian process regression model for the objective function $F_1$ in the third time;

FIG. 21 is a diagram illustrating an example of the distribution of the mean and the learning data in the Gaussian process regression model for the objective function $F_1$ in the fourth time;

FIG. 22 is a diagram illustrating an example of the distribution of the mean and the learning data in the Gaussian process regression model for the objective function $F_1$ in the fifth time;

FIG. 23 is a diagram illustrating an example of the distribution of the mean and the learning data in the Gaussian process regression model for the objective function $F_1$ in the sixth time;

FIG. 24 is a diagram illustrating an example of the distribution of the mean and the learning data in the Gaussian process regression model for the objective function $F_1$ in the seventh time;

FIG. 25 is a diagram illustrating an example of the distribution of the mean and the learning data in the Gaussian process regression model for the objective function $F_1$ in the eighth time;

FIG. 26 is a diagram illustrating an example of the distribution of the mean and the learning data in the Gaussian process regression model for the objective function $F_1$ in the ninth time;

FIG. 27 is a diagram illustrating an example of the distribution of the mean and the learning data in the Gaussian process regression model for the objective function $F_1$ in the tenth time;

FIG. 28 is a diagram illustrating an example of the distribution of the mean and the learning data in the Gaussian process regression model for the objective function $F_1$ in the eleventh time;

FIG. 29 is a diagram illustrating an example of the distribution of the mean and the learning data in the Gaussian process regression model for the objective function $F_1$ in the twelfth time;

FIG. 30 is a diagram illustrating an example of the distribution of the mean and the learning data in the Gaussian process regression model for the objective function $F_1$ in the thirteenth time;

FIG. 31 is a diagram illustrating an example of the distribution of the mean and the learning data in the Gaussian process regression model for the objective function $F_1$ in the fourteenth time;

FIG. 32 is a diagram illustrating an example of the distribution of the mean and the learning data in the Gaussian process regression model for the objective function $F_1$ in the fifteenth time;

FIG. 33 is a diagram illustrating an example of the distribution of the mean and the learning data in the Gaussian process regression model for the objective function $F_1$ in the sixteenth time;

FIG. 34 is a diagram illustrating an example of the distribution of the mean and the learning data in the Gaussian process regression model for the objective function $F_1$ in the seventeenth time;

FIG. 35 is a diagram illustrating an example of the distribution of the mean and the learning data in the Gaussian process regression model for the objective function $F_1$ in the eighteenth time;

FIG. 36 is a diagram illustrating an example of the distribution of the mean and the learning data in the Gaussian process regression model for the objective function $F_1$ in the nineteenth time;

FIG. 37 is a diagram illustrating an example of the distribution of the mean and the learning data in the Gaussian process regression model for the objective function $F_1$ in the twentieth time;

FIG. 38 is a diagram illustrating an example of the distribution of the variance and the learning data in the Gaussian process regression model for the objective function $F_1$ in the initial state (Bayesian optimization);

FIG. 39 is a diagram illustrating an example of the distribution of the variance and the learning data in the Gaussian process regression model for the objective function $F_1$ in the first time;

FIG. 40 is a diagram illustrating an example of the distribution of the variance and the learning data in the Gaussian process regression model for the objective function $F_1$ in the second time;

FIG. 41 is a diagram illustrating an example of the distribution of the variance and the learning data in the Gaussian process regression model for the objective function $F_1$ in the third time;

FIG. 42 is a diagram illustrating an example of the distribution of the variance and the learning data in the Gaussian process regression model for the objective function $F_1$ in the fourth time;

FIG. 43 is a diagram illustrating an example of the distribution of the variance and the learning data in the Gaussian process regression model for the objective function $F_1$ in the fifth time;

FIG. 44 is a diagram illustrating an example of the distribution of the variance and the learning data in the Gaussian process regression model for the objective function $F_1$ in the sixth time;

FIG. 45 is a diagram illustrating an example of the distribution of the variance and the learning data in the Gaussian process regression model for the objective function $F_1$ in the seventh time;

FIG. 46 is a diagram illustrating an example of the distribution of the variance and the learning data in the Gaussian process regression model for the objective function $F_1$ in the eighth time;

FIG. 47 is a diagram illustrating an example of the distribution of the variance and the learning data in the Gaussian process regression model for the objective function $F_1$ in the ninth time;

FIG. 48 is a diagram illustrating an example of the distribution of the variance and the learning data in the Gaussian process regression model for the objective function $F_1$ in the tenth time;

FIG. 49 is a diagram illustrating an example of the distribution of the variance and the learning data in the Gaussian process regression model for the objective function $F_1$ in the eleventh time;

FIG. 50 is a diagram illustrating an example of the distribution of the variance and the learning data in the Gaussian process regression model for the objective function $F_1$ in the twelfth time;

FIG. 51 is a diagram illustrating an example of the distribution of the variance and the learning data in the Gaussian process regression model for the objective function $F_1$ in the thirteenth time;

FIG. 52 is a diagram illustrating an example of the distribution of the variance and the learning data in the Gaussian process regression model for the objective function $F_1$ in the fourteenth time;

FIG. 53 is a diagram illustrating an example of the distribution of the variance and the learning data in the Gaussian process regression model for the objective function $F_1$ in the fifteenth time;

FIG. 54 is a diagram illustrating an example of the distribution of the variance and the learning data in the Gaussian process regression model for the objective function $F_1$ in the sixteenth time;

FIG. 55 is a diagram illustrating an example of the distribution of the variance and the learning data in the Gaussian process regression model for the objective function $F_1$ in the seventeenth time;

FIG. 56 is a diagram illustrating an example of the distribution of the variance and the learning data in the Gaussian process regression model for the objective function $F_1$ in the eighteenth time;

FIG. 57 is a diagram illustrating an example of the distribution of the variance and the learning data in the Gaussian process regression model for the objective function $F_1$ in the nineteenth time;

FIG. 58 is a diagram illustrating an example of the distribution of the variance and the learning data in the Gaussian process regression model for the objective function $F_1$ in the twentieth time;

FIG. 59 is a diagram illustrating an example of the distribution of the mean and the learning data in the Gaussian process regression model for the objective function $F_2$ in the initial state (Bayesian optimization);

FIG. 60 is a diagram illustrating an example of the distribution of the mean and the learning data in the Gaussian process regression model for the objective function $F_2$ in the first time;

FIG. 61 is a diagram illustrating an example of the distribution of the mean and the learning data in the Gaussian process regression model for the objective function $F_2$ in the second time;

FIG. 62 is a diagram illustrating an example of the distribution of the mean and the learning data in the Gaussian process regression model for the objective function $F_2$ in the third time;

FIG. 63 is a diagram illustrating an example of the distribution of the mean and the learning data in the Gaussian process regression model for the objective function $F_2$ in the fourth time;

FIG. 64 is a diagram illustrating an example of the distribution of the mean and the learning data in the Gaussian process regression model for the objective function $F_2$ in the fifth time;

FIG. 65 is a diagram illustrating an example of the distribution of the mean and the learning data in the Gaussian process regression model for the objective function $F_2$ in the twentieth time;

FIG. 66 is a diagram illustrating an example of the distribution of the variance and the learning data in the Gaussian process regression model for the objective function $F_2$ in the initial state (Bayesian optimization);

FIG. 67 is a diagram illustrating an example of the distribution of the variance and the learning data in the Gaussian process regression model for the objective function $F_2$ in the first time;

FIG. 68 is a diagram illustrating an example of the distribution of the variance and the learning data in the Gaussian process regression model for the objective function $F_2$ in the second time;

FIG. 69 is a diagram illustrating an example of the distribution of the variance and the learning data in the Gaussian process regression model for the objective function $F_2$ in the third time;

FIG. 70 is a diagram illustrating an example of the distribution of the variance and the learning data in the Gaussian process regression model for the objective function $F_2$ in the fourth time;

FIG. 71 is a diagram illustrating an example of the distribution of the variance and the learning data in the Gaussian process regression model for the objective function $F_2$ in the fifth time;

FIG. 72 is a diagram illustrating an example of the distribution of the variance and the learning data in the Gaussian process regression model for the objective function $F_2$ in the twentieth time;

FIG. 73 is a diagram illustrating an example of correspondence between arbitrary seven points (seven Pareto solutions) in a finally obtained Pareto solution set and results of simulation by a finite element method; and

FIG. 74 is a diagram illustrating an example of correspondence between a Pareto solution set obtained by 173 simulations in the embodiment and a Pareto solution set obtained by 25,000 simulations in an existing technique.

DESCRIPTION OF EMBODIMENTS

(Information Processing Apparatus)

The technique disclosed in the present case is based on findings of the present inventors that, in the existing technique, the number of analyses such as experiments and simulations becomes enormous, and multi-objective optimization cannot be efficiently performed when the multi-objective optimization for a plurality of objective functions is performed. Therefore, before describing details of the technique disclosed in the present case, problems and the like of the existing technique will be described.

As described above, in the scene of device design or the like, in the case of performing multi-objective optimization that attempts to simultaneously optimize a plurality of objectives (objects to be optimized), there may be a tradeoff relationship between these objectives. More specifically, for example, in the scene of device design, the objective of improving performance of a device and the objective of reducing manufacturing cost of the device are sometimes in a tradeoff relationship, and when one objective is tried to be achieved, the other objective becomes difficult to be achieved.

As described above, in multi-objective optimization, when a tradeoff relationship is present between the objectives, there is usually no only one optimal solution, and a "Pareto solution set" is obtained as a candidate for the optimal solution. The "Pareto solution set" can be, for example, a set of solutions (Pareto solutions) in which each objective is achieved as much as possible (the solution is close to the optimal solution) and the degree of achievement (balance) of each objective is different.

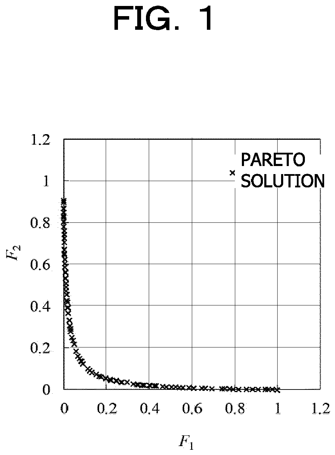

Here, FIG. 1 illustrates an example of the Pareto solution set in the multi-objective optimization; In FIG. 1, the horizontal axis represents a value of an objective function $F_1$ in which a first objective in the multi-objective optimization is expressed by a function, and the vertical axis represents a value of an objective function $F_2$ in which a second objective in multi-objective optimization is expressed by a function. Furthermore, in the example illustrated in FIG. 1, the smaller the values (closer to 0) of the objective functions $F_1$ and $F_2$, the more the objective is achieved (optimized), indicating that the solution is favorable.

Therefore, since in the example illustrated in FIG. 1, there is a tradeoff relationship between the objective functions $F_1$ and $F_2$, when the objective functions $F_1$ and $F_2$ are to be simultaneously optimized, a large number of solutions (Pareto solutions) represented by points ($\times$ marks) is obtained in FIG. 1 and a set of these solutions becomes the Pareto solution set. Note that the curve (or curved surface) connecting the Pareto solutions in the Pareto solution set is called Pareto solution front.

Furthermore, in the case of multi-objective optimization, for example, it is favorable to update each Pareto solution of the Pareto solution set so as to have a more favorable value (to enable the Pareto solution set to approach the lower left where both the values of the objective functions $F_1$ and $F_2$ become smaller in the example of FIG. 1) by updating the objective functions or the like. By updating the Pareto solution set in this way, a more appropriate (more optimized) Pareto solution set can be obtained.

As a method of the multi-objective optimization capable of updating a Pareto solution set, the above-described "multi-objective genetic algorithm" can be used, for example. The multi-objective genetic algorithm is an algorithm obtained by applying a genetic algorithm in which the principle of evolution of living organisms is applied to optimization to multi-objective optimization.

In the multi-objective genetic algorithm, for example, a plurality of individuals (populations) is generated using an objective function or the like representing each objective, and a better individual can be obtained by repeating alternation of generations of the individuals. For this reason, in the multi-objective genetic algorithm, it is possible to search while simultaneously holding a plurality of individuals (populations) each having an objective function with a certain good value, so that the Pareto solution set can be directly obtained.

Here, the "population (generation)" in the multi-objective genetic algorithm means a group (collection) of data having variable values different from each other (parameter values different from each other).

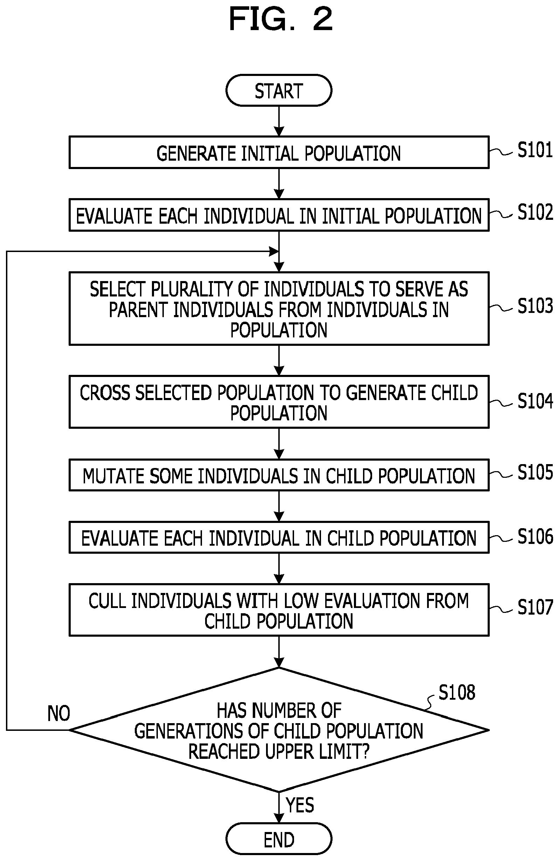

Here, an example of a flow of the multi-objective optimization using the multi-objective genetic algorithm in an existing technique will be described with reference to FIG. 2.

First, in an example of the multi-objective genetic algorithm, an initial population is generated (S101). The initial population can be, for example, a group of a plurality of initial individuals generated by randomly setting the variables in the respective objective functions.

Next, in an example of the multi-objective genetic algorithm, each individual in the initial population is evaluated (S102). Furthermore, the evaluation of each individual can be performed by specifying a value of the objective function in each individual by, for example, performing a simulation (numerical value calculation) using the value of the variable (parameter) in the individual.

Next, in an example of the multi-objective genetic algorithm, a plurality of individuals to serve as parent individuals is selected from the individuals in the population (S103). Specifically, in an example of the multi-objective genetic algorithm, a plurality of highly evaluated individuals is selected from the initial individuals in S103.

Then, in an example of the multi-objective genetic algorithm, the selected population is crossed to generate a child population (S104). Furthermore, in S104, crossing-over (recombination) with respect to the population can be performed by, for example, replacing some of the variables (parameters) in the individuals with the variables of other individuals.

Next, in an example of the multi-objective genetic algorithm, some individuals in the child population are mutated (S105). Furthermore, in S105, the mutation to individuals can be performed by, for example, randomly changing some of the variables (parameters) (using random numbers) in the individuals.

Next, in an example of the multi-objective genetic algorithm, each individual in the child population is evaluated (S106). Furthermore, in S106, the evaluation of each individual can be performed by specifying the value of the objective function in each individual by, for example, performing a simulation using the value of the variable in the individual, similarly to S102.

Then, in an example of the multi-objective genetic algorithm, individuals with low evaluation are culled from the child population (S107). Furthermore, in S107, the cull of individuals in the child population can be performed by, for example, removing (eliminating) individuals with low evaluation in the child population from the child population.

Then, in an example of the multi-objective genetic algorithm, it is determined whether the number of generations of child individuals has reached an upper limit (predetermined number) (S108). In S108, the processing is returned to S103 in a case where it is determined that the number of generations of child individuals has not reached the upper limit, or the processing is terminated in a case where it is determined that the number of generations of child individuals has reached the upper limit.

In this way, in an example of the multi-objective genetic algorithm, the population (Pareto solution set) is updated by repeating the generation of individuals until the number of generations of child individuals reaches the upper limit. That is, in the multi-objective genetic algorithm, for example, the population corresponding to the Pareto solution set can be specified, so that the Pareto solution set can be directly obtained.

Furthermore, in the multi-objective genetic algorithm, as described above, when evaluating a generated individual, the value of the objective function in each individual is specified by performing a simulation using the value of the variable (parameter) in the individual. Therefore, in the existing technique using the multi-objective genetic algorithm, for example, when the number of generations of individuals to be generated is 250 and the number of individuals in each generation is 100, "250 generations × 100 individuals = 25,000 times" of simulations (analyses) is needed for multi-objective optimization.

As described above, the existing technique using the multi-objective genetic algorithm has the problem that a huge number of analyses is needed according to the number of generations of individuals generated by the multi-objective genetic algorithm and the number of individuals generated in each generation. As described above, the existing technique has the problem that the number of analyses such as experiments and simulations becomes enormous, and multi-objective optimization cannot be efficiently performed when the multi-objective optimization for a plurality of objective functions is performed.

Therefore, the present inventors have earnestly studied an apparatus and the like capable of reducing the number of analyses in the multi-objective optimization, and have obtained the following findings. That is, the present inventors have found that the number of analyses in the multi-objective optimization can be reduced by an information processing apparatus and the like to be described below.

The information processing apparatus as an example of the technique disclosed in the present case is an information processing apparatus that performs multi-objective optimization, and the information processing apparatus updates a model created on the basis of data for each of a plurality of objective functions regarding the multi-objective optimization, using a Pareto solution having a relatively large variance of values of the objective function in the model in a Pareto solution set obtained from the model by a multi-objective optimization method.

Here, in an example of the technique disclosed in the present case, for example, the model is created on the basis of data for each of a plurality of objective functions regarding the multi-objective optimization. That is, in an example of the technique disclosed in the present case, for example, regarding the plurality of objective functions to be optimized by the multi-objective optimization, the objective functions are modeled by performing calculations using data of the objective functions.

Then, in an example of the technique disclosed in the present case, for example, the Pareto solution set is obtained from the created model by a multi-objective optimization method. That is, in an example of the technique disclosed in the present case, for example, the Pareto solution set is obtained by performing the multi-objective optimization by a multi-objective optimization method using the modeled objective functions. Furthermore, in an example of the technique disclosed in the present case, as the multi-objective optimization method, for example, the above-mentioned multi-objective genetic algorithm can be used.

Moreover, in an example of the technique disclosed in the present case, for example, the model is updated using the Pareto solution having a relatively large variance of values of the objective function in the model in the obtained Pareto solution set. That is, in an example of the technique disclosed in the present case, for example, the variance of Pareto solutions is specified for at least some of the Pareto solutions in the Pareto solution set, and the model for the objective functions is updated using the Pareto solution having the large specified variance.

Here, among Pareto solution sets, the Pareto solution having a relatively large variance of the values of the objective function in the model is considered to be low in reliability as a solution among the obtained Pareto solution sets. Therefore, prediction accuracy near the Pareto solution in the model used for multi-objective optimization is considered to be low. That is, by specifying the Pareto solution with a large variance, a region where the accuracy of the model for each objective function is low can be specified.

As described above, in an example of the technique disclosed in the present case, the accuracy of the region where the accuracy in the model of each objective function is low can be intensively improved by updating the model using the Pareto solution having a relatively large variance of values of the objective function in the model. That is, in an example of the technique disclosed in the present case, the model can be efficiently updated by paying attention to the point that the accuracy of the model with a large variance is considered to be low in the Pareto solution set.

Furthermore, in an example of the technique disclosed in the present case, for example, when the model is updated using the Pareto solution having a relatively large variance of values of the objective function in the model, an analysis such as a simulation is performed using the value of the variable (parameter) in the pareto solution. That is, in an example of the technique disclosed in the present case, an analysis such as a simulation is performed using the value of the variable in the Pareto solution having a large variance and thus low reliability as a solution, accurate data corresponding to the Pareto solution is obtained, and the model of each objective function is updated further using the data. By doing so, in an example of the technique disclosed in the present case, for example, in the model of each objective function, by adding data of a region where data is considered to be insufficient for the distribution of data used for creating the model, the accuracy of the model can be efficiently improved.

Here, in an example of the technique disclosed in the present case, as described above, for example, the data for updating the model is acquired by performing an analysis such as a simulation for the Pareto solution having a relatively large variance of values of the objective function in the model. Therefore, in an example of the technique disclosed in the present case, the data that can efficiently improve the accuracy of the model can be selectively acquired.

Therefore, the accuracy of the model can be improved with a smaller number of analyses (number of simulations), and the multi-objective optimization can be performed with sufficient accuracy.

Furthermore, in the multi-objective optimization, usually, processing of acquiring new data by a simulation (for example, numerical value analysis) is higher in calculation cost than the processing of executing optimization by the multi-objective optimization method (for example, the multi-objective genetic algorithm) to obtain the Pareto solution set. Therefore, by reducing the number of simulations (number of analyses) needed for acquiring the data for updating the model, as in an example of the technique disclosed in the present case, the multi-objective optimization can be efficiently performed.

As described above, in an example of the technique disclosed in the present case, a model created on the basis of data for each of a plurality of objective functions regarding the multi-objective optimization is updated using a Pareto solution having a relatively large variance of values of the objective function in the model in a Pareto solution set obtained from the model by a multi-objective optimization method. By doing so, in an example of the technique disclosed in the present case, the accuracy of the model can be efficiently improved with a small number of analyses. Therefore, the multi-objective optimization by the multi-objective optimization method using the model can be efficiently performed while reducing the number of analyses.

In the following description, an example of the technique disclosed in the present case will be described with reference to the drawings. Note that the processing (operation) such as updating the model in the information processing apparatus as an example of the technique disclosed in the present case can be performed by a model update unit included in the information processing apparatus, for example.

Here, the information processing apparatus in the present case has the model update unit and may further include other units (means) as needed. Note that the model update unit can be implemented by, for example, a combination of a processor such as a central processing unit (CPU) and a memory such as a random access memory (RAM).

The information processing apparatus as an example of the technique disclosed in the present case is an apparatus that performs multi-objective optimization.

Here, the multi-objective optimization (multi-objective optimization problem to be processed) performed using an example of the technique disclosed in the present case is not particularly limited as long as the multi-objective optimization is expressed using a plurality of objective functions and can be appropriately selected according to the objective. Furthermore, as described above, the technique disclosed in the present case can be suitably used in a case where, for example, a tradeoff relationship is present between a plurality of objective functions.

Specific examples of the multi-objective optimization in the case where a tradeoff relationship is present between a plurality of objective functions include a "magnetic material area" and "magnetic flux shielding performance" in magnetic shield design (a form of an embodiment to be described below), "manufacturing cost" and "performance" in device design, "weight" and "strength" in a structure shape, "calculation accuracy" and "calculation speed (calculation cost)" in computer-based development, and "speed" and "stability" in a transportation system, for example.

<Creation of Model>

In an example of the technique disclosed in the present case, as described above, the model is created on the basis of data for each of a plurality of objective functions regarding the multi-objective optimization, for example.

Here, the objective function regarding the multi-objective optimization is not particularly limited as long as the objective function is a function representing the objective to be considered in the multi-objective optimization, and can be appropriately selected according to the objective. Furthermore, in the technique disclosed in the present case, the number of objective functions handled in the multi-objective optimization is not particularly limited as long as the number is plural, but can be, for example, two.

Furthermore, the objective function regarding the multi-objective optimization can be, for example, a function that represents a relationship between the objective (performance, cost, or the like) to be optimized and the variable (parameter to be varied by optimization) in the multi-objective optimization.

Then, in an example of the technique disclosed in the present case, the model is created (the objective function is modeled) on the basis of the data (learning data) for each of the plurality of objective functions.

In an example of the technique disclosed in the present case, the method of creating the model on the basis of the data for each objective function is not particularly limited as long as the model (prediction model) corresponding to each objective function can be created, and can be appropriately selected according to the objective. As the method of creating the model on the basis of the data for each objective function, for example, a method of obtaining a "Gaussian process regression model" using "Bayesian optimization" can be favorably used.

The Bayesian optimization means a method of specifying, for a Gaussian process regression model in which the objective function is estimated as a distribution on the basis of learning data, points (settings) to be added to the learning data, using a function (acquisition function) representing the degree of possibility of improving the accuracy of the Gaussian process regression model. In an example of the technique disclosed in the present case, for example, the Bayesian optimization using the acquisition function is performed, a point at which new learning data should be acquired is specified in consideration of mean and variance of the Gaussian process regression model, a simulation (analysis) for the specified point is performed, and the learning data is acquired.

In other words, in an example of the technique disclosed in the present case, for example, a point at which the variance is large (accuracy is low) in the Gaussian process regression model is specified using the acquisition function in the Bayesian optimization, and a simulation (analysis) for the point is performed, so that the learning data is increased. By doing so, the learning data is added to the region of the distribution of data in which the variance is considered to be large and the accuracy is considered to be low (the learning data is insufficient) by using the Bayesian optimization, so that the accuracy of the Gaussian process regression model can be efficiently improved.

As described above, the acquisition function used in the Bayesian optimization is not particularly limited as long as the acquisition function is a function representing the degree of possibility of improving the accuracy of the Gaussian process regression model, and can be appropriately selected according to the objective. Types of the acquisition function include, for example, lower confidence bound (LCB), probability of improvement (PI), expectation of improvement (EI), and the like. Among these types, in an example of the technique disclosed in the present case, for example, use of the lower confidence bound (LCB) is favorable.

As the LCB acquisition function, for example, the one expressed by the following equation can be used.

$$\boldsymbol{x}_t = \arg\max\{-\mu_{t-1}(\boldsymbol{x}) + w_t \sigma_{t-1}^2(\boldsymbol{x})\}$$

In the above equation, arg max{ } means a set of x that maximizes the function inside { }, $\mu_{t-1}(x)$ is a function representing the mean in the Gaussian process regression model, $w_t$ is a coefficient for weighting, $\sigma^2_{t-1}(x)$ is a function representing the variance in the Gaussian process regression model.

By performing the Bayesian optimization using the above equation as the acquisition function, the point at which new learning data should be acquired can be specified in consideration of the mean and variance of the Gaussian process regression model.

Here, the Gaussian process regression model means, for example, a model created by Gaussian process regression that estimates a function from an input variable to a real value as an output variable, and can properly model a non-linear function, which is difficult to be modeled in linear regression.

Furthermore, in the Gaussian process regression model, the objective function is obtained as the distribution of the objective function, and thus the accuracy (uncertainty) of the model can be expressed. More specifically, in the Gaussian process regression model, for example, the mean and variance in the modeled objective function can be predicted.

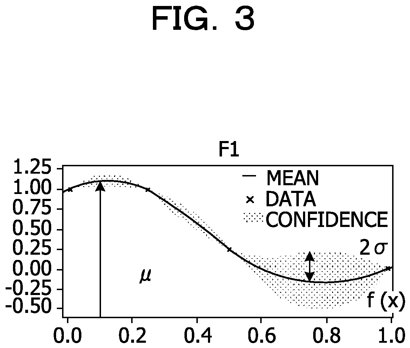

FIG. 3 illustrates an example of the Gaussian process regression model. In FIG. 3, the vertical axis represents the objective function f(x), and the horizontal axis represents the variable x of the objective function f(x).

As illustrated in FIG. 3, in the Gaussian process regression model, for example, a mean $\mu$ in the modeled objective function f(x), 2o corresponding to twice a standard deviation o, and the like, can be predicted. Therefore, in the Gaussian process regression model, a variance $\sigma^2$ can be obtained by squaring the standard deviation o.

Note that details of a method of obtaining a Gaussian process regression model using Bayesian optimization are disclosed in documents such as "Akaho, Shotaro, "Introduction to Gaussian Process Regression", System/Control/Information, 2018, vol. 62, no. 10, pp.390-395.", for example.

In an example of the technique disclosed in the present case, in the case of creating the Gaussian process regression model using the Bayesian optimization, appropriately prepared learning data can be used when creating an initial Gaussian process regression model (Gaussian process regression model serving as a base of the Bayesian optimization by the acquisition function). Furthermore, in an example of the technique disclosed in the present case, the learning data (initial point) for creating the initial Gaussian process regression model can be obtained by, for example, executing a simulation (analysis) for acquiring the learning data.

Here, in an example of the technique disclosed in the present case, the learning data (initial point) for creating the initial Gaussian process regression model is favorably determined using a method called "Latin hypercube sampling". By using Latin hypercube sampling, the learning data can be acquired such that the distribution of the learning data is not biased as compared with the case of simply randomly determining the distribution of the learning data when acquiring the learning data.

Note that details of Latin hypercube sampling are disclosed in documents such as "M. D. Mckay, R. J. Beckman & W. J. Conover, "A Comparison of Three Methods for Selecting Values of Input Variables in the Analysis of Output From a Computer Code", Technometrics, vol. 42, no. 1, pp. 55-61, Feb. 2000, DOI: 10.1080/00401706.2000.10485979", for example.

<Specification of Pareto Solution Set by Multi-objective Optimization Method>

Then, in an example of the technique disclosed in the present case, for example, the Pareto solution set is obtained (specified) from the created model by the multi-objective optimization method, as described above.

In an example of the technique disclosed in the present case, the multi-objective optimization method used for obtaining the Pareto solution set is not particularly limited as long as the method can perform the multi-objective optimization based on the created model to obtain the Pareto solution set, and can be appropriately selected according to the objective.

As the multi-objective optimization method used for obtaining the Pareto solution set, the multi-objective genetic algorithm can be favorably used, as described above. That is, in an example of the technique disclosed in the present case, the multi-objective optimization method is favorably the multi-objective genetic algorithm. Note that various parameters such as the number of generations to be generated, the number of individuals (population number) of each generation, and a crossing-over probability in the multi-objective genetic algorithm can be appropriately selected according to the objective.

In an example of the technique disclosed in the present case, for example, a predetermined number of individuals (population) is generated on the basis of the Gaussian process regression model created by using the Bayesian optimization by the multi-objective genetic algorithm, and processing such as crossing-over, mutation, and cull is performed to perform alternation of generations of the population. Then, in an example of the technique disclosed in the present case, for example, the alternation of generations is repeated up to a predetermined number of generations, and a population in the last generation in the generated generations can be specified as the Pareto solution set.

That is, in an example of the technique disclosed in the present case, for example, each individual in the population of the last generation in the multi-objective genetic algorithm can be specified as each Pareto solution in the Pareto solution set. Furthermore, the individuals in the multi-objective genetic algorithm mean, for example, data having variable values different from each other.

Moreover, in an example of the technique disclosed in the present case, "non-dominated sorting genetic algorithms-II (NSGA II)" can be favorably used as the multi-objective genetic algorithm.

Regarding "NSGA II", for example, a method disclosed in above "K. Deb, A. Pratap, S. Agarwal and T. Meyarivan, 'A fast and elitist multiobjective genetic algorithm: NSGA-II,' in IEEE Transactions on Evolutionary Computation, vol. 6, no. 2, pp. 182-197, April 2002, doi:10.1109/4235.996017." or the like can be appropriately used.

Furthermore, when executing the multi-objective optimization using "NSGA II" on a computer, for example, "DEAP", which is a Python library, can be used. Details of "DEAP" is disclosed in, for example, "Felix-Antoine Fortin, Francois-Michel De Rainville, Marc-Andre Gardner, Marc Parizeau and Christian Gagne, "DEAP: Evolutionary Algorithms Made Easy", Journal of Machine Learning Research, pp. 2171-2175, no 13, jul 2012." or the like.

<Model Update>

In an example of the technique disclosed in the present case, for example, the model is updated using the Pareto solution having a relatively large variance of values of the objective function in the model in the obtained Pareto solution set.

Here, in an example of the technique disclosed in the present case, the method of specifying the variance of the Pareto solution in the Pareto solution set is not particularly limited and can be appropriately selected according to the objective. In an example of the technique disclosed in the present case, the variance of the Pareto solution in the Pareto solution set can be specified by, for example, inputting the value of the variable in the Pareto solution to the model of each objective function regarding the multi-objective optimization.

More specifically, in an example of the technique disclosed in the present case, the variance of the Pareto solution in the Pareto solution set can be specified by inputting specific data (the value of the variable) of the Pareto solution to the Gaussian process regression model corresponding to each objective function, for example. As described above, in the Gaussian process regression model, the mean and variance in the modeled objective function can be predicted. Therefore, the variance in the Pareto solution can be specified (calculated) by inputting the specific data of the Pareto solution.

Furthermore, in an example of the technique disclosed in the present case, the variance in the Pareto solution may be obtained for all the Pareto solutions included in the Pareto solution set or may be obtained for some of the Pareto solutions included in the Pareto solution set.

In an example of the technique disclosed in the present case, for example, it is favorable to specify a Pareto solution having a high evaluation value in the Pareto solution set and to obtain the variance for the specified Pareto solution having the high evaluation value.

Here, the Pareto solution having the high evaluation value can be, for example, an individual (Pareto solution) having high evaluation in the calculation by the multi-objective genetic algorithm, and it is favorable to select a plurality of individuals scattered (distributed in a wide range) to some extent. Note that the Pareto solution having the high evaluation value can be easily specified by the calculation regarding the multi-objective genetic algorithm (for example, NSGA II). Note that details of the method of specifying the Pareto solution having the high evaluation value in the case of using "NSGA II" as the multi-objective genetic algorithm is described in the above document about "NSGA II".

In an example of the technique disclosed in the present case, when updating the model using the Pareto solution having a relatively large variance of values of the objective function in the model in the obtained Pareto solution set, it is favorable, for example, to analyze the Pareto solutions in which a sum of the variances specified using the models corresponding to the objective functions regarding the multi-objective optimization is larger than a threshold value. That is, in an example of the technique disclosed in the present case, it is favorable to specify the variance of the Pareto solution using the model corresponding to each objective function, and acquire the learning data by a simulation using the values of the variables of the Pareto solutions in which the sum of the variances in the models becomes larger than the threshold value.

By doing so, in an example of the technique disclosed in the present case, the models can be updated in consideration of the accuracy of both the models corresponding to the respective objective functions regarding the multi-objective optimization. Therefore, the accuracy of the models can be more efficiently improved.

Furthermore, in an example of the technique disclosed in the present case, a Pareto solution that has a large variance and specified to acquire new data (learning data) may be referred to as a "recommendation point". That is, in an example of the technique disclosed in the present case, for example, Pareto solutions in which the sum of the variances of the models (for example, the Gaussian process regression models) is larger than the threshold value can be specified as the recommendation points.

Note that, in an example of the technique disclosed in the present case, the threshold value for the sum of the variances in the models can be set to a predetermined value (for example, a decimal number smaller than 1, or the like) in advance.

In an example of the technique disclosed in the present case, as described above, simulations (analyses) for the recommendation points in the Pareto solution set are performed, and the learning data at the recommendation points is acquired. More specifically, in an example of the technique disclosed in the present case, the learning data of the Gaussian process regression model is acquired by performing a simulation by a finite element method (FEM) or the like using specific data (variable values) of the Pareto solutions specified as the recommendation points.

Note that the analysis for the recommendation point is not particularly limited as long as the data (learning data) that can update the model can be acquired, and can be appropriately selected according to the objective. Therefore, as the analysis for the recommendation point, for example, data may be acquired by performing a simulation (numerical value calculation) as described above, or data acquired by an actual experiment may be read and used.

Then, in an example of the technique disclosed in the present case, for example, it is favorable to add the new learning data obtained by the simulation for the recommendation point to the learning data of the model to update (relearn) the model. In other words, in an example of the technique disclosed in the present case, it is favorable that the model update unit performs the analysis using the Pareto solution having a relatively large variance in the Pareto solution set and adds an analysis result to the data to update the model.

By doing so, in an example of the technique disclosed in the present case, for example, in the model of each objective function, by adding data of a region where data is considered to be insufficient for the distribution of data used for creating the model, the accuracy of the model can be efficiently improved.

Furthermore, in an example of the technique disclosed in the present case, it is favorable to repeat the model update until there is no Pareto solution having a large variance in the Pareto solution set. In other words, in an example of the technique disclosed in the present case, it is favorable that the model update unit updates the model until there is no Pareto solution having a larger variance than the threshold value in the updated Pareto solution set obtained by the multi-objective optimization method on the basis of the model updated using the Pareto solution having a relatively large variance in the Pareto solution set.

By doing so, in an example of the technique disclosed in the present case, the multi-objective optimization can be performed on the basis of the model with higher accuracy in which the variance of the Pareto solution in the Pareto solution set becomes smaller, and thus the Pareto solution set with higher accuracy can be obtained. Note that, in an example of the technique disclosed in the present case, the Pareto solution set (updated Pareto solution set) obtained by the multi-objective optimization method on the basis of the model updated using the Pareto solution having a relatively large variance in the Pareto solution set may be called "updated Pareto solution set".

Moreover, as a specific mode, in an example of the technique disclosed in the present case, it is favorable to repeat specification of the recommendation point by the multi-objective genetic algorithm, acquisition of the learning data by the analysis for the recommendation point, and relearning of the Gaussian process regression model until there is no recommendation point. By doing so, in an example of the technique disclosed in the present case, a highly accurate Pareto solution set can be obtained using the Gaussian process regression model with improved accuracy.

<Other Units>

In an example of the technique disclosed in the present case, other parts of the information processing apparatus as an example of the technique disclosed in the present case are not particularly limited and can be appropriately selected according to the objective.

Hereinafter, an example of the technique disclosed in the present case will be described in more detail using configuration examples of the device, flowcharts, and the like.

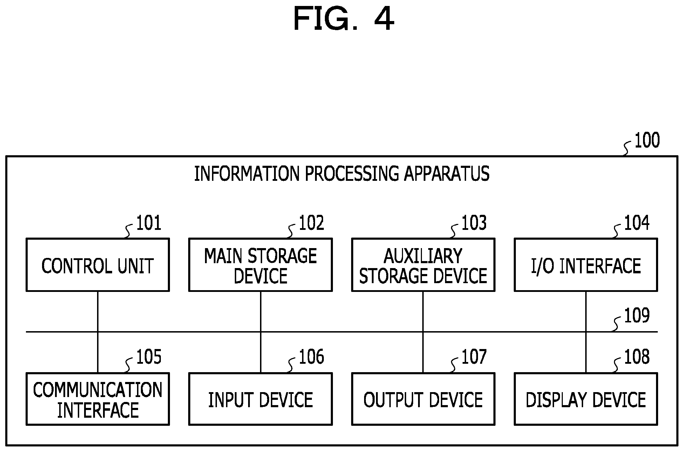

FIG. 4 illustrates a hardware configuration example of an information processing apparatus disclosed in the present case.

In an information processing apparatus 100, for example, a control unit 101, a main storage device 102, an auxiliary storage device 103, an input output (I/O) interface 104, a communication interface 105, an input device 106, an output device 107, and a display device 108 are connected to one another via a system bus 109.

The control unit 101 performs arithmetic operations (for example, four arithmetic operations, comparison operations, and arithmetic operations for the annealing method), hardware and software operation control, and the like. As the control unit 101, for example, a central processing unit (CPU) can be used.

The control unit 101 realizes various functions, for example, by executing a program (for example, information processing program disclosed in the present case or the like) read in the main storage device 102 or the like.

Processing executed by the model update unit in the information processing apparatus disclosed in the present case can be executed by, for example, by the control unit 101.

The main storage device 102 stores various programs and data or the like needed for executing various programs. As the main storage device 102, for example, a device having at least one of a read only memory (ROM) and a random access memory (RAM) can be used.

The ROM stores various programs, for example, a basic input/output system (BIOS) or the like. Furthermore, the ROM is not particularly limited and can be appropriately selected according to the objective. For example, a mask ROM, a programmable ROM (PROM), or the like can be exemplified.

The RAM functions, for example, as a work range expanded when various programs stored in the ROM, the auxiliary storage device 103, or the like are executed by the control unit 101. The RAM is not particularly limited and can be appropriately selected according to the objective. For example, a dynamic random access memory (DRAM), a static random access memory (SRAM), or the like can be exemplified.

The auxiliary storage device 103 is not particularly limited as long as the device can store various information and can be appropriately selected according to the objective. For example, a solid state drive (SSD), a hard disk drive (HDD), or the like can be exemplified. Furthermore, the auxiliary storage device 103 may be a portable storage device such as a CD drive, a DVD drive, or a Blu-ray (registered trademark) disc (BD) drive.

Furthermore, the information processing apparatus program disclosed in the present case is, for example, stored in the auxiliary storage device 103, loaded into the RAM (main memory) of the main storage device 102, and executed by the control unit 101.

The I/O interface 104 is an interface used to connect various external devices. The I/O interface 104 can input/output data to/from, for example, a compact disc ROM (CD-ROM), a digital versatile disk ROM (DVD-ROM), a magneto-optical disk (MO disk), a universal serial bus (USB) memory (USB flash drive), or the like.

The communication interface 105 is not particularly limited, and a known communication interface can be appropriately used. For example, a communication device using wireless or wired communication or the like can be exemplified.

The input device 106 is not particularly limited as long as the device can receive input of various requests and information to the information processing apparatus 100, and a known device can be appropriately used. For example, a keyboard, a mouse, a touch panel, a microphone, or the like can be exemplified. Furthermore, in a case where the input device 106 is a touch panel (touch display), the input device 106 can also serve as the display device 108.

The output device 107 is not particularly limited, and a known device can be appropriately used. For example, a printer or the like can be exemplified.

The display device 108 is not particularly limited, and a known device can be appropriately used. For example, a liquid crystal display, an organic EL display, or the like can be exemplified.

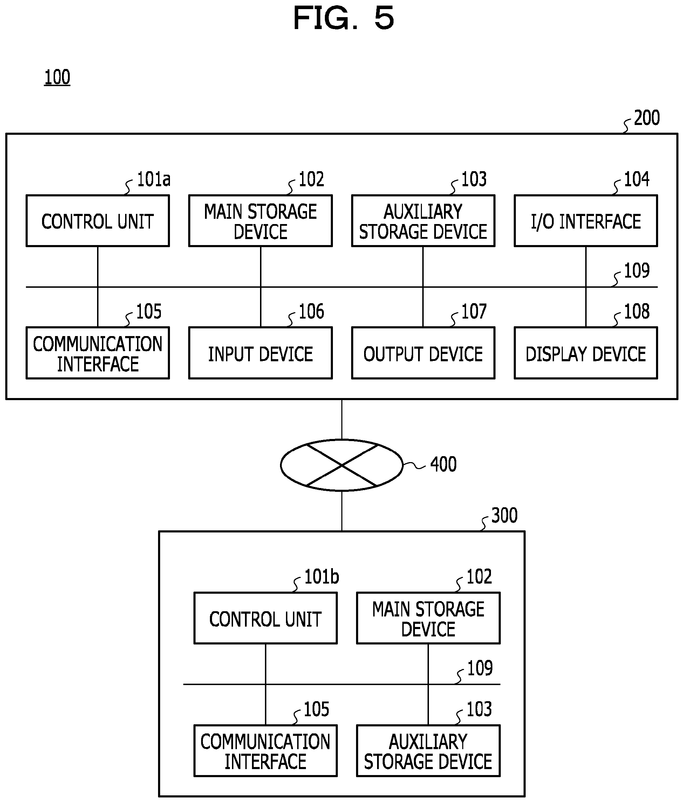

FIG. 5 illustrates another hardware configuration example of the information processing apparatus disclosed in the present case.

In the example illustrated in FIG. 5, the information processing apparatus 100 is divided into a terminal device 200 and a server computer 300. The terminal device 200 performs processing such as the multi-objective optimization (specification of the Pareto solution set) by the multi-objective genetic algorithm, setting of simulation parameters for acquiring the learning data, output of the optimization results, and the like. Meanwhile, the server computer 300 performs, for example, the simulation for acquiring the learning data (for example, numerical value calculation by the finite element method). Furthermore, in the example illustrated in FIG. 5, the terminal device 200 and the server computer 300 in the information processing apparatus 100 are connected by a network 400.

In the example illustrated in FIG. 5, for example, as the terminal device 200, a normal personal computer can be used, and as the server computer 300, a computer cluster in which a plurality of computers is connected or a large and high-performance computer such as a supercomputer can be used. Note that the server computer 300 may be a group of computers on the cloud.

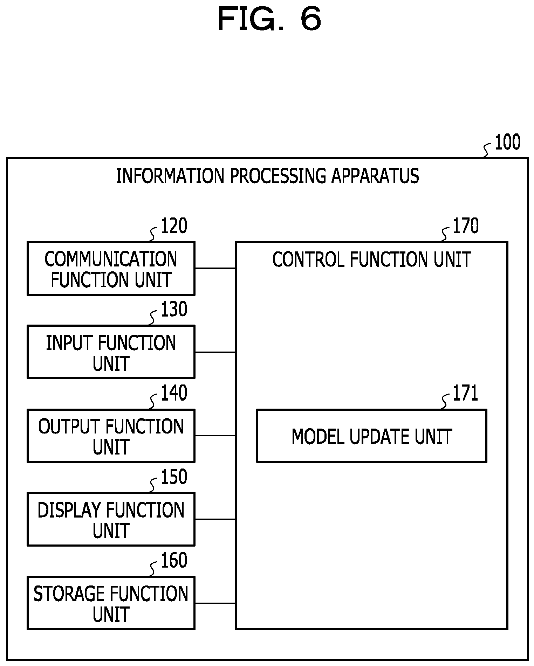

FIG. 6 illustrates a functional configuration example of the information processing apparatus disclosed in the present case.

As illustrated in FIG. 6, the information processing apparatus 100 includes a communication function unit 120, an input function unit 130, an output function unit 140, a display function unit 150, a storage function unit 160, and a control function unit 170.

The communication function unit 120 transmits and receives, for example, various data to and from an external device.

The input function unit 130 receives, for example, various instructions for the information processing apparatus 100.

The output function unit 140 prints and outputs, for example, information regarding the result of optimization in the multi-objective optimization, and the like.

The display function unit 150 displays, for example, information regarding the result of optimization in the multi-objective optimization on the display, and the like.

The storage function unit 160 stores, for example, various programs, information regarding the result of optimization in the multi-objective optimization, and the like.

The control function unit 170 includes a model update unit 171. The control function unit 170 executes, for example, the various programs stored in the storage function unit 160 and controls the operation of the entire information processing apparatus 100.

The model update unit 171 performs, as described above, the processing of updating the model created on the basis of data for each of a plurality of objective functions regarding the multi-objective optimization, using the Pareto solution having a relatively large variance of values of the objective function in the model in the Pareto solution set obtained from the model by the multi-objective optimization method, and the like.

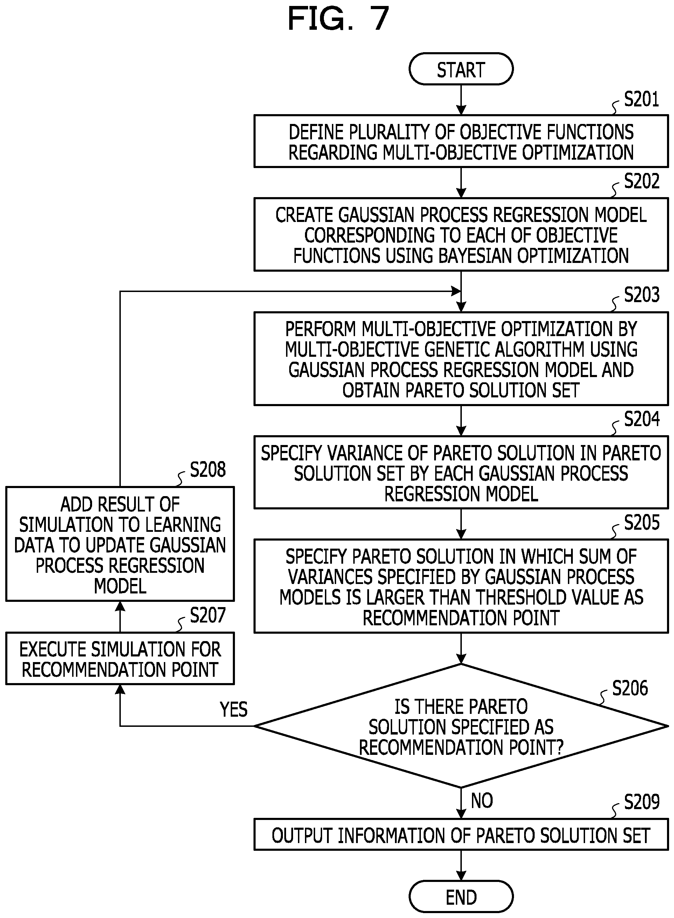

Here, an example of the flow when updating the model to perform the multi-objective optimization will be described using an example of the technique disclosed in the present case with reference to FIG. 7.

As illustrated in FIG. 7, first, the model update unit 171 defines a plurality of objective functions regarding the multi-objective optimization (S201). More specifically, in S201, the model update unit 171 defines, for each objective of the multi-objective optimization, the objective function representing the relationship between the objective (performance, cost, or the like) to be optimized and the variable (parameter varied by optimization) in the multi-objective optimization.

Next, the model update unit 171 creates the Gaussian process regression model corresponding to each of the objective functions using the Bayesian optimization (S202). More specifically, in S202, the model update unit 171 performs the Bayesian optimization using, for example, the acquisition function, specifies the point at which the simulation is performed in consideration of the mean and variance of the Gaussian process regression model and the learning data is acquired, and creates the Gaussian process regression model.

Next, the model update unit 171 performs the multi-objective optimization by the multi-objective genetic algorithm using the Gaussian process regression model and obtains the Pareto solution set (S203). More specifically, in S203, the model update unit 171 generates a predetermined number of individuals (population) on the basis of, for example, the Gaussian process regression model, and performs the processing such as crossing-over, mutation, and cull to perform alternation of generations of the population. In addition, more specifically, in S203, the model update unit 171 repeats the alternation of generations, for example, up to a predetermined number of generations, and specifies the population of the last generation among the generated generations as the Pareto solution set.

Then, the model update unit 171 specifies the variance of the Pareto solution in the Pareto solution set by each Gaussian process regression model (S204). More specifically, in S204, the model update unit 171 inputs the specific data (variable value) of the Pareto solution to the Gaussian process regression model corresponding to each objective function, for example, to specify the variance of the Pareto solution.

Next, the model update unit 171 specifies the Pareto solutions in which the sum of the variances specified by the Gaussian process regression models is larger than the threshold value as the recommendation points (S205). More specifically, in S205, the model update unit 171 specifies, for example, the variance of the Pareto solution using the Gaussian process regression model corresponding to each objective function, and specifies the Pareto solutions in which the sum of the variances in the Gaussian process regression models is larger than the threshold value as the recommendation points.

Next, the model update unit 171 determines whether there is the Pareto solution specified as the recommendation point (S206). Then, in S206, the model update unit 171 moves the processing to S207 in the case of determining that there is the Pareto solution specified as the recommendation point, or moves the processing to S209 in the case of determining that there is no Pareto solution specified as the recommendation point.

Then, in the case of determining that there is the Pareto solution specified as the recommendation point in S206, the model update unit 171 executes the simulation for the recommendation point (S207). More specifically, in S207, the model update unit 171 acquires the learning data of the Gaussian process regression model by performing the simulation, for example, by the finite element method (FEM) or the like using specific data (variable value) of the Pareto solution specified as the recommendation point.

Next, the model update unit 171 adds the simulation result to the learning data to update the Gaussian process regression model, and returns the processing to S203 (S208). More specifically, in S208, the model update unit 171 updates the Gaussian process regression model by, for example, relearning the Gaussian process regression model by further using the learning data obtained in the simulation, and returns the processing to S203.

Furthermore, the model update unit 171 outputs information about the Pareto solution set (updated Pareto solution set) when determining that there is no Pareto solution specified as the recommendation point in S206 (S209).

Then, the model update unit 171 terminates the processing when the output of the information about the Pareto solution set is completed.

Furthermore, in FIG. 7, the flow of the processing in an example of the technique disclosed in the present case has been described according to a specific order. However, in the technique disclosed in the present case, it is possible to appropriately switch an order of steps in a technically possible range. Furthermore, in the technique disclosed in the present case, a plurality of steps may be collectively performed in a technically possible range.

(Information Processing Method)

The information processing method disclosed in the present case is an information processing method for causing a computer to perform multi-objective optimization, and including

a model update process of updating a model created on the basis of data for each of a plurality of objective functions regarding the multi-objective optimization, using a Pareto solution having a relatively large variance of values of the objective function in the model in a Pareto solution set obtained from the model by a multi-objective optimization method.

The information processing method disclosed in the present case can be performed by, for example, the information processing apparatus disclosed in the present case. Furthermore, a suitable mode in the information processing method disclosed in the present case can be made similar to the suitable mode in the information processing apparatus disclosed in the present case, for example.

(Information Processing Program)

The information processing program disclosed in the present case is an information processing program for performing multi-objective optimization, and

for causing a computer to perform a model update process (model update processing) of updating a model created on the basis of data for each of a plurality of objective functions regarding the multi-objective optimization, using a Pareto solution having a relatively large variance of values of the objective function in the model in a Pareto solution set obtained from the model by a multi-objective optimization method.

The information processing program disclosed in the present case can be, for example, a program that causes a computer to execute the information processing method disclosed in the present case. Furthermore, a suitable mode in the information processing program disclosed in the present case can be made similar to the suitable mode in the information processing apparatus disclosed in the present case, for example.

The information processing program disclosed in the present case can be created using various known programming languages according to the configuration of a computer system to be used, the type and version of an operating system, and the like.

The information processing program disclosed in the present case may be recorded in a recording medium such as a built-in hard disk or an externally attached hard disk, or may be recorded in a recording medium such as a CD-ROM, DVD-ROM, MO disk, or USB memory.

Moreover, in a case of recording the information processing program disclosed in the present case in the above-described recording medium, the program can be directly used or can be installed into a hard disk and then used through a recording medium readout device included in the computer system, as needed. Furthermore, the information processing program disclosed in the present case may be recorded in an external storage region (another computer or the like) accessible from the computer system through an information communication network. In this case, the information processing program disclosed in the present case, which is recorded in the external storage region, can be directly used or can be installed in a hard disk and then used through the information communication network from the external storage region, as needed.

Note that the information processing program disclosed in the present case may be divided for each of arbitrary pieces of processing and recorded in a plurality of recording media.

(Computer-Readable Recording Medium)

A computer-readable recording medium disclosed in the present case records the information processing program disclosed in the present case.

The computer-readable recording medium disclosed in the present case is not limited to any particular medium and can be appropriately selected according to the objective. Examples of the computer-readable recording medium include a built-in hard disk, an externally attached hard disk, a CD-ROM, a DVD-ROM, an MO disk, a USB memory, and the like, for example.

Furthermore, the computer-readable recording medium disclosed in the present case may be a plurality of recording media in which the information processing program disclosed in the present case is divided and recorded for each of arbitrary pieces of processing.

[Embodiments]

Embodiments of the technique disclosed in the present case will be described. However, the technique disclosed in the present case is not limited to the embodiments.

As an embodiment, the multi-objective optimization of optimizing the shape of the magnetic shield has been performed using an example of the information processing apparatus disclosed in the present case. In the present embodiment, the multi-objective optimization of optimizing the shape of the magnetic shield has been performed according to the flow illustrated in the flowchart in FIG. 7, using the information processing apparatus having the hardware configuration illustrated in FIG. 4.

<Setting of Target for Multi-objective Optimization and Definition of Objective Function>

In the present embodiment, the multi-objective optimization by the multi-objective genetic algorithm has been performed setting the objective of minimizing the average magnetic flux density in the target region located inside the magnetic shield and the objective of minimizing the area of the magnetic material forming the magnetic shield as "Fi" and "$F_2$", respectively. That is, in the present embodiment, search for the shape of the magnetic shield has been performed, which can minimize the magnetic flux density in the region (target region) where the magnetism is desired to be shielded by the magnetic shield with as small an area as possible of the magnetic material (as small an amount as possible of the material), for the magnetic shield.

Furthermore, in the present embodiment, when the area of the magnetic material forming the magnetic shield is reduced, the average magnetic flux density in the target region located inside the magnetic shield usually increases (the magnetic flux shielding performance decreases). Therefore, there is a tradeoff relationship between the objective functions $F_1$ and $F_2$.

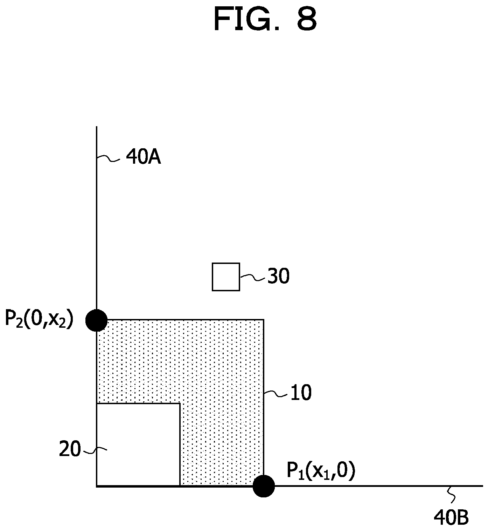

FIG. 8 is a diagram illustrating an example of a calculation system when optimizing the shape of the magnetic shield in the present embodiment. As illustrated in FIG. 8, in the present embodiment, a target region 20 that is the region where the magnetism is desired to be shielded by the magnetic shield is located inside a design region 10 that is the region where the magnetic material forming the magnetic shield can be arranged. Furthermore, in the present embodiment, as illustrated in FIG. 8, a coil 30 (10 kAT (ampere-turn)) that generates the magnetic flux is located above the design region 10. Note that, in the present embodiment, as illustrated in FIG. 8, a boundary on the left side of the design region 10 and the target region 20 is a symmetric boundary 40A, and a boundary on a lower side of the design region 10 and the target region 20 is a natural boundary 40B. Furthermore, a relative magnetic permeability $\mu_r$ of the magnetic material placed in the design region 10 has been set to 1000.

Note that, in the present embodiment, as the variables (design parameters) in the objective functions $F_1$ and $F_2$, a variable "$x_1$" for the magnitude in an x-axis direction (right end position) in the magnetic shield and a variable "$x_2$" for the magnitude in a y-axis direction (upper end position) in the magnetic shield are set. Specifically, in the present embodiment, as illustrated in FIG. 8, the magnitude in the x-axis direction (right end position) in the magnetic shield has been represented by Pi(xi, 0) and the magnitude in the y-axis direction (upper end position) in the magnetic shield has been represented by $P_2(0, x_2)$. Furthermore, the variables $x_1$ and $x_2$ are variables that take values in a range of 51 or more and 100 mm or less.

Furthermore, in the present embodiment, the objective function $F_1$ for minimizing the average magnetic flux density in the target region 20 has been normalized using an average magnetic flux density $E_1$ of the target region 20 in the case of "$(x_1, x_2) = (51, 51)$" (the area of the magnetic material is the minimum). Moreover, in the present embodiment, the objective function $F_2$ for minimizing the area of the magnetic material forming the magnetic shield has been normalized

using the area $E_2$ of the magnetic material in the case where the entire design region 10 is the magnetic material (the area of the magnetic material the maximum).

Here, specific equations of the objective functions $F_1$ and $F_2$ used in the present embodiment will be described.

In the present embodiment, the learning data used for learning the Gaussian process regression models corresponding to the objective functions $F_1$ and $F_2$ is acquired by executing the simulation by the finite element method (FEM). Here, in the present embodiment, when numerically solving a governing equation for a two-dimensional static magnetic field by the simulation using the finite element method, the following mathematical equation has been used as the governing equation for the two-dimensional static magnetic field:

$$\mathrm{rot}\left(\frac{1}{\mu}\mathrm{rot}A\right) = J_0$$

In the above-described equation, $\mu$ means the magnetic permeability, $J_0$ means the current density in the coil 30, and A means a vector potential. Note that the magnetic permeability $\mu$ is $\mu_0$ = 4n $\times$ $10^{-7}$ (H/m) in a region where the magnetic material does not exist (a region where the air exists).

Then, in the present embodiment, the vector potential A was obtained by numerically solving the above-described governing equation for the two-dimensional static magnetic field by the analysis using the finite element method (performing simulation by the finite element method). Next, in the present embodiment, the magnetic flux density (B) in each element has been obtained by the following mathematical equation on the basis of the obtained vector potential A, and the distribution of the magnetic flux density in the calculation system (the distribution of the field related to the shielding performance of the magnetic flux) has been specified.

$$B = \mathrm{rot}A$$

Then, in the present embodiment, the objective functions $F_1$ and $F_2$ are expressed using the specified magnetic flux density B as follows:

$$F_1 = \frac{1}{E_1}\left(\frac{\sum_{i=1}^{N_T}|B_i \Delta S_i|}{S_T}\right)$$

$$F_2 = \frac{1}{E_2}\sum_{j=1}^{N_m} \Delta S_j$$

In the above equations, $S_T$ means the area of the target region 20, $\Delta S_i$ means the area of an element i, $\Delta S_j$ means the area of an element j, $N_T$ means the number of elements (divisions) of the target region 20, and $N_m$ means the number of elements in the design region 10.

As described above, in the present embodiment, the distribution of the magnetic flux density has been obtained by dividing the calculation system illustrated in FIG. 8 into a plurality of elements, and numerically solving the governing equation for the two-dimensional static magnetic field by the simulation using the finite element method, and the objective functions $F_1$ and $F_2$ have been defined.

<Modeling of Objective Function>

Then, in the present embodiment, the objective functions defined as described above are modeled as the Gaussian process regression models using the Bayesian optimization.

Specifically, in the present embodiment, first, five points (ten points in total) of initial learning data (initial points) have been prepared for each of the objective functions $F_1$ and $F_2$, using the above-described "Latin hypercube sampling".

Then, in the present embodiment, the Gaussian process regression model corresponding to each objective function has been created on the basis of the initial learning data.

Here, the method of obtaining the Gaussian process regression model corresponding to each objective function using the learning data will be more specifically described.

First, it is assumed that, given learning data D = {(x$_1$, y$_1$),..., (x$_N$, y$_N$)} including a pair of input x and output y, x and y have a relationship of y = f(x), and the function f is generated from Gaussian processes f to GP (0, k(x, x')) with the mean 0. Here, k(x, x') is a kernel function, and in the present embodiment, a Gaussian kernel in the case of having a Gaussian error expressed by the following equation has been used:

$$k(x, x') = \theta_1 \exp\left(-\frac{(x - x')}{\theta_2}\right) + \theta_3 \delta(x, x')$$

Note that, in the above equation, the kernel parameters ((θ$_1$, θ$_2$, θ$_3$) have been optimized using a conjugate gradient method on the basis of the learning data.

Moreover, in the case of y = (y$_1$, y$_2$,..., y$_N$), y to N (0, K) are established using a kernel matrix K. Here, "K$_{ij}$ = k(x$_i$, x$_j$)".

Then, a predicted distribution of output y* for new input x* in the Gaussian process regression model can be expressed by the following equation:

$$p(y^* | \mathbf{x}^*, D) = N(\mathbf{k}_*^T \mathbf{K}^{-1} \mathbf{y}, k_{**} - \mathbf{k}_*^T \mathbf{K}^{-1} \mathbf{k}_*)$$

Here, k* and k** in the above equation are expressed by the following equations:

$$\mathbf{k}_* = \left(k(\mathbf{x}^*, \mathbf{x}_1), k(\mathbf{x}^*, \mathbf{x}_2), \cdots, k(\mathbf{x}^*, \mathbf{x}_N)\right)^T$$

$$k_{**} = k(\mathbf{x}^*, \mathbf{x}^*)$$

Therefore, from the above equations, the mean μ and variance σ$^2$ for the new input x* can be expressed by the following equations:

$$\mu = \mathbf{k}_*^T \mathbf{K}^{-1} \mathbf{y}$$

$$\sigma^2 = k_{**} - \mathbf{k}_*^T \mathbf{K}^{-1} \mathbf{k}_*$$

Note that, for the method of obtaining a Gaussian process regression model corresponding to each objective function using learning data, for example, techniques disclosed in documents such as "Daichi Mochihashi, Shigeyuki Ohba, "Gaussian Process Regression and Machine Learning", Machine Learning Professional Series, Kodansha, 2019." and "Akaho, Shotaro, "Introduction to Gaussian Process Regression", System/Control/Information, 2018, vol. 62, no. 10, pp.390-395." can be appropriately used.

Next, in the present embodiment, the Bayesian optimization using the acquisition function has been performed for the created Gaussian process regression model, and the point at which new learning data should be acquired has been specified in consideration of the mean and variance of the Gaussian process regression model.

In the present embodiment, as the acquisition function, the one expressed by the following equation (LCB) has been used.

$$x_t = \arg\max\{-\mu_{t-1}(\boldsymbol{x}) + w_t \sigma^2_{t-1}(\boldsymbol{x})\}$$

In the above equation, arg max{ } means a set of x that maximizes the function inside { }, $\mu_{t-1}(x)$ is a function representing the mean in the Gaussian process regression model, wt is a coefficient for weighting, $\sigma^2_{t-1}(x)$ is a function representing the variance in the Gaussian process regression model.

Then, in the present embodiment, the learning data has been acquired by performing the simulation (analysis) for the point specified by the Bayesian optimization using the above-described acquisition function.

In the present embodiment, the objective function $F_1$ for minimizing the average magnetic flux density in the target region has had sufficient accuracy at the point of time when ten learning data have been acquired and relearned by ten times of the Bayesian optimization. Meanwhile, the objective function $F_2$ for minimizing the area of the magnetic material forming the magnetic shield has had sufficient accuracy at the point of time when two learning data have been acquired and relearned by twice of the Bayesian optimization.

Note that, in the present embodiment, the objective function $F_1$ including the term of the magnetic flux density has a more complicated function form between the objective function $F_1$ for minimizing the average magnetic flux density in the target region and the objective function $F_2$ for minimizing the area of the magnetic material forming the magnetic shield, and thus has needed more learning data.

Here, in the present embodiment, as described above, for the objective function $F_1$, five initial learning data (initial points) have been prepared and ten learning data have been further added by the Bayesian optimization. Therefore, fifteen learning data in total have been obtained by simulations. Meanwhile, for the objective function $F_2$, five initial learning data (initial points) have been prepared and two learning data have been further added by the Bayesian optimization. Therefore, seven learning data in total have been obtained by simulations.

Therefore, in the present embodiment, twenty-two simulations in total have been performed to create the Gaussian process regression models for the objective functions $F_1$ and $F_2$, respectively.

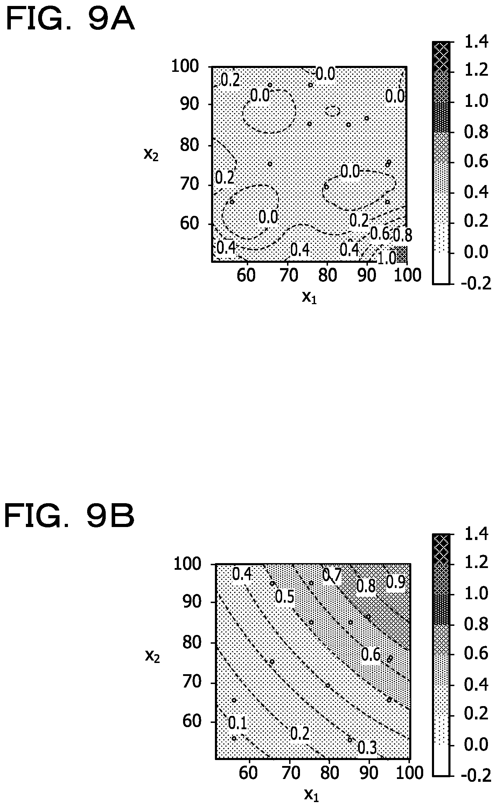

FIG. 9A illustrates an example of a distribution of a mean and learning data in a Gaussian process regression model obtained by Bayesian optimization for an objective function $F_1$. Similarly, FIG. 9B illustrates an example of a distribution of a mean and learning data in a Gaussian process regression model obtained by Bayesian optimization for an objective function $F_2$.

Here, in FIGs. 9A and 9B, the horizontal axis represents "$x_1$" that is magnitude in an x-axis direction of magnetic shield, and the vertical axis represents "$x_2$" that is magnitude in a $\gamma$-axis direction of the magnetic shield. Furthermore, in FIGs. 9A and 9B, a dark-colored (close to black) part represents a large mean value, and a light-colored (close to white) part represents a small mean value.

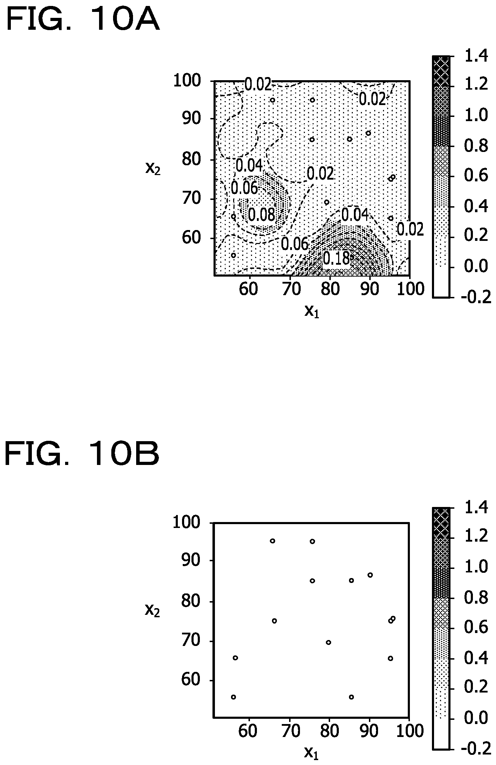

FIG. 10A illustrates an example of a distribution of a variance and learning data in the Gaussian process regression model obtained by Bayesian optimization for the objective function $F_1$. Similarly, FIG. 10B illustrates an example of a distribution of a variance and learning data in a Gaussian process regression model obtained by Bayesian optimization for an objective function $F_2$.

Here, in FIGs. 10A and 10B, a dark-colored (close to black) part represents a large variance value, and a light-colored (close to white) part represents a small variance value.

Therefore, in the present embodiment, as illustrated in FIGs. 10A and 10B, the more white areas there are, the smaller the variance of the Gaussian process regression model and the higher the accuracy of the model, in the drawing illustrating the variance. Therefore, in the Gaussian process regression model for the objective function $F_1$ illustrated in FIG. 10A, it can be seen that there is a region (a region close to black) in which the variance value is large and the accuracy of the Gaussian process regression model is not sufficient.

<Multi-objective Optimization by Multi-objective Genetic Algorithm>

<<First Time (First Generation)>>

Next, in the present embodiment, the multi-objective optimization has been executed using "NSGA II" as a specific example of the multi-objective genetic algorithm, using the Gaussian process regression model created by the Bayesian optimization, the Pareto solution set has been obtained. When executing the multi-objective optimization with "NSGA II", a Python library "DEAP" has been used.

Furthermore, as the parameters of "NSGA II" at the time of the multi-objective optimization, the number of generations has been set to 250, the number of individuals (population number) of each generation has been set to 100, and the crossing-over probability has been set to 0.9.

Then, in the present embodiment, to prevent waste due to extracting the same Pareto solution (individual) in the obtained Pareto solution set, duplicate individuals in the final Pareto solution set of the 250th generation have been deleted.

Next, in the present embodiment, ten individuals with high evaluation values in "NSGA II" have been extracted. Here, as the Pareto solution with a high evaluation value, an individual (Pareto solution) having high evaluation in the calculation by "NSGA II" has been selected.

Next, in the present embodiment, the variance in each Gaussian process regression model for the extracted Pareto solutions (individuals) has been calculated, and the Pareto solutions having the sum of the variances is equal to or larger than a threshold value $\delta$ have been identified as the recommendation points.

More specifically, in the present embodiment, the variance $\sigma_1{}^2$ in the Gaussian process regression model for the objective function $F_1$ and the variance $\sigma_2{}^2$ in the Gaussian process regression model for the objective function $F_2$ have been calculated for ten extracted Pareto solutions. Then, in the present embodiment, the Pareto solutions in which the sum of the variance $\sigma_1{}^2$ and the variance $\sigma_2{}^2$ is larger than the threshold value $\delta$ have been recommended. Note that, in the present embodiment, the threshold value $\delta$ has been set to "0.001".

As described above, in the present embodiment, the Pareto solution satisfying the following equation has been specified as the recommendation point.

$$\sigma_1^2 + \sigma_2^2 > \delta$$

In the present embodiment, when specifying the recommendation points as described above, seven recommendation points have been specified in the first multi-objective optimization by "NSGA II".

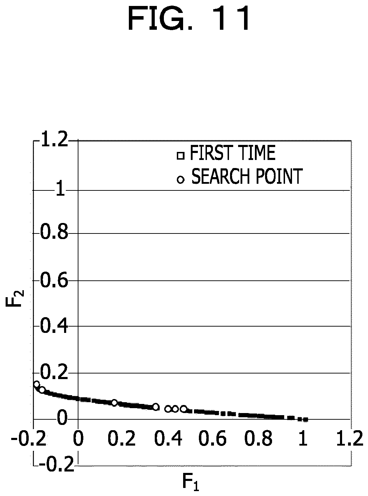

FIG. 11 illustrates an example of a Pareto solution set obtained by first multi-objective optimization by "NSGA II" and specified recommendation points. In FIG. 11, the horizontal axis represents the value of the objective function $F_1$ for minimizing the average magnetic flux density in the target region, and the vertical axis represents the value of the objective function $F_2$ for minimizing the area of the magnetic material forming the magnetic shield.

In the present embodiment, as illustrated in FIG. 11, seven recommendation points (search points) have been specified from the Pareto solution set (population) obtained in the first multi-objective optimization.

Next, in the present embodiment, new learning data has been acquired by performing the simulation (analysis) by the finite element method (FEM) using the specific data (variable values) of the specified seven recommendation points. Next, in the present embodiment, the acquired learning data has been added to the learning data of the Gaussian process regression model, and the Gaussian process regression model has been updated (relearned).

Therefore, the number of executed simulations (analyses) at the end of the first multi-objective optimization has been "22 times + 7 times = 29 times".

<<Second Time (Second Generation)>>

Next, in the present embodiment, the second multi-objective optimization has been performed in a similar manner to the first multi-objective optimization except that the Gaussian process regression model updated by the first multi-objective optimization has been used.

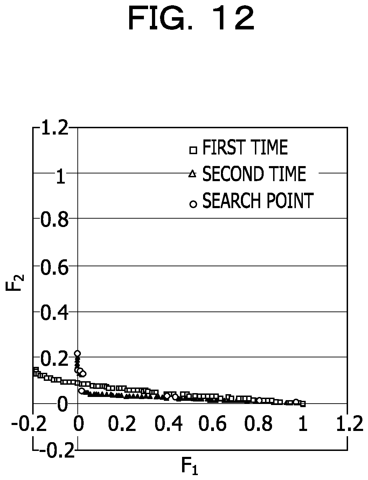

FIG. 12 illustrates an example of a Pareto solution set obtained by second multi-objective optimization by "NSGA II" and specified recommendation points. In the present embodiment, as illustrated in FIG. 12, nine recommendation points (search points) have been specified from the Pareto solution set (population) obtained in the second multi-objective optimization.

Therefore, the number of executed simulations (analyses) at the end of the second multi-objective optimization has been "29 times + 9 times = 38 times".

<<Third Time (Third Generation)>>

Next, in the present embodiment, the third multi-objective optimization has been performed in a similar manner to the second multi-objective optimization except that the Gaussian process regression model updated by the second multi-objective optimization has been used.

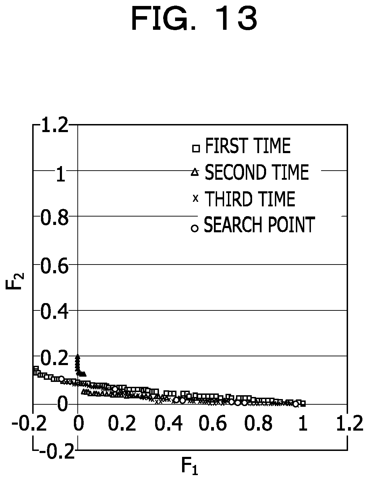

FIG. 13 illustrates an example of a Pareto solution set obtained by third multi-objective optimization by "NSGA II" and specified recommendation points. In the present embodiment, as illustrated in FIG. 13, ten recommendation points (search points) have been specified from the Pareto solution set (population) obtained in the third multi-objective optimization.

Therefore, the number of executed simulations (analyses) at the end of the third multi-objective optimization has been "38 times + 10 times = 48 times".

<<Fourth Time (Fourth Generation)>>

Next, in the present embodiment, the fourth multi-objective optimization has been performed in a similar manner to the third multi-objective optimization except that the Gaussian process regression model updated by the third multi-objective optimization has been used.

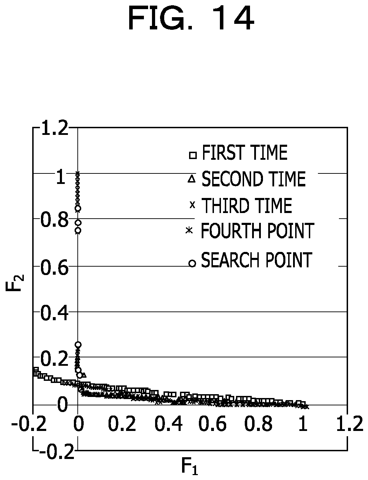

FIG. 14 illustrates an example of a Pareto solution set obtained by fourth multi-objective optimization by "NSGA II" and specified recommendation points. In the present embodiment, as illustrated in FIG. 14, seven recommendation points (search points) have been specified from the Pareto solution set (population) obtained in the fourth multi-objective optimization.

Therefore, the number of executed simulations (analyses) at the end of the fourth multi-objective optimization has been "48 times + 7 times = 55 times".

<<Fifth Time (Fifth Generation)>>

Next, in the present embodiment, the fifth multi-objective optimization has been performed in a similar manner to the fourth multi-objective optimization except that the Gaussian process regression model updated by the fourth multi-objective optimization has been used.

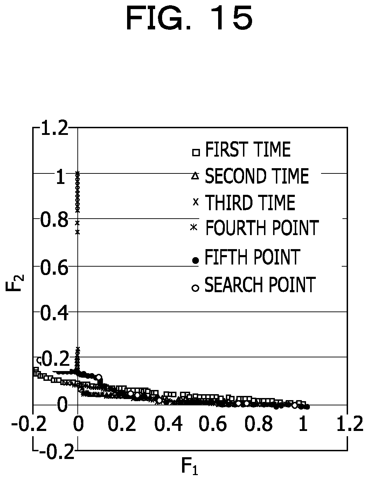

FIG. 15 illustrates an example of a Pareto solution set obtained by fifth multi-objective optimization by "NSGA II" and specified recommendation points. In the present embodiment, as illustrated in FIG. 15, ten recommendation points (search points) have been specified from the Pareto solution set (population) obtained in the fifth multi-objective optimization.

Therefore, the number of executed simulations (analyses) at the end of the fifth multi-objective optimization has been "55 times + 10 times = 65 times".

In the present embodiment, the sixth (sixth generation) to the nineteenth (nineteenth generation) multi-objective optimizations have been similarly performed. In these multi-objective optimizations, the multi-objective optimization has been continued because the recommendation points have not run out.

<<Twentieth Time (Twentieth Generation)>>

Then, in the present embodiment, the twentieth multi-objective optimization has been performed in a similar manner to the multi-objective optimization so far except that the Gaussian process regression model updated by the nineteenth multi-objective optimization has been used.

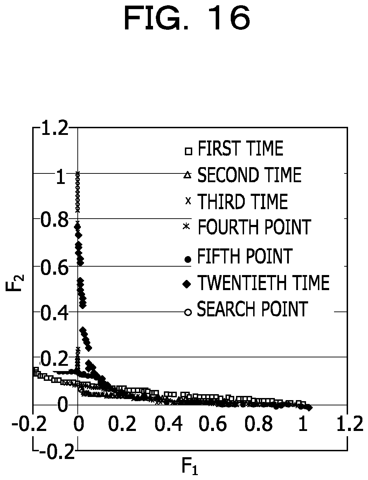

FIG. 16 illustrates an example of a Pareto solution set obtained by twentieth multi-objective optimization by "NSGA II". In the present embodiment, as illustrated in FIG. 16, no recommendation points (search points) have been specified from the Pareto solution set (population) obtained in the twentieth multi-objective optimization.

Furthermore, the number of executed simulations (analyses) at the end of the twentieth multi-objective optimization has been "173 times".

In this way, in the present embodiment, the multi-objective optimization by "NSGA II" and the relearning of the Gaussian process regression model have been repeated until there have been no recommendation points. In the present embodiment, there have been no recommendation points when the multi-objective optimization by "NSGA II" and the relearning of the Gaussian process regression model have been repeated twenty times, so the repetitive processing has been terminated.

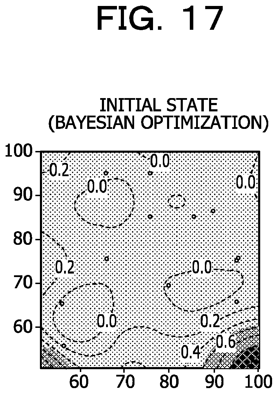

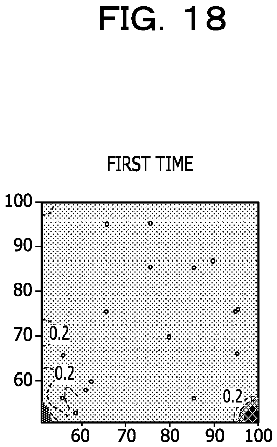

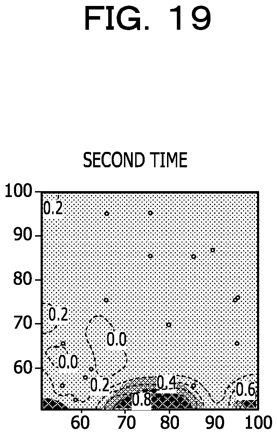

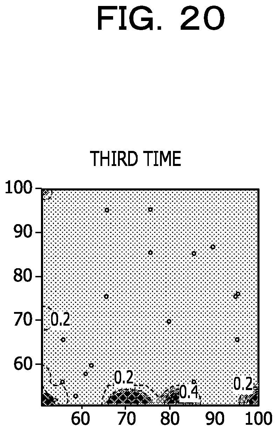

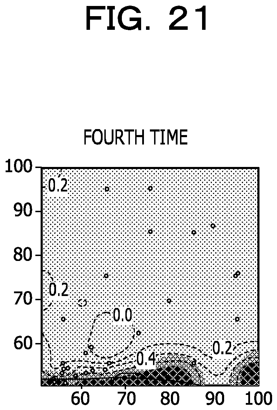

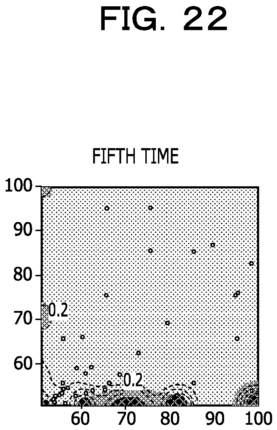

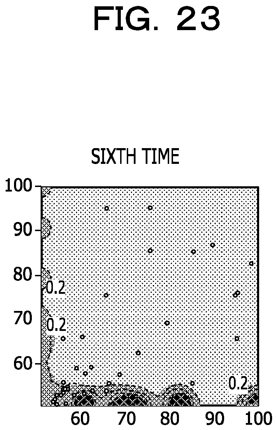

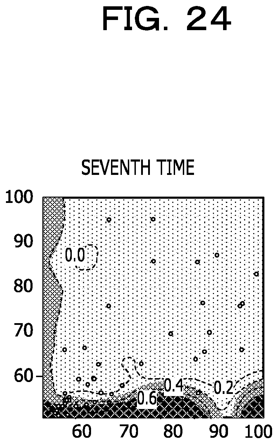

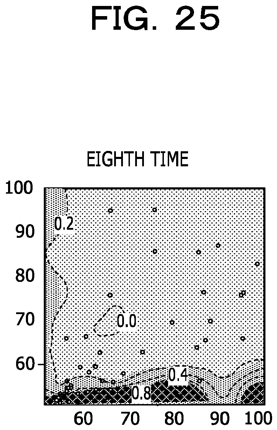

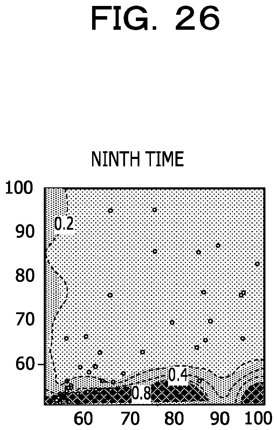

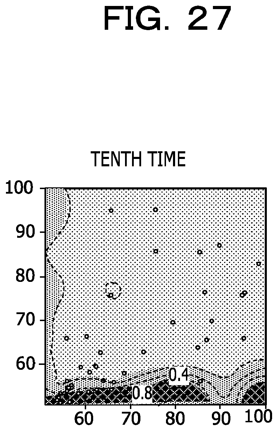

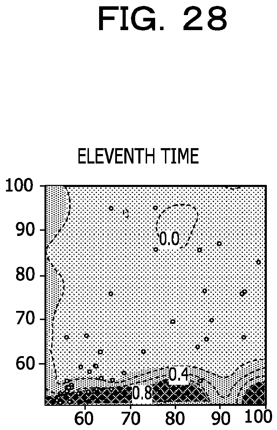

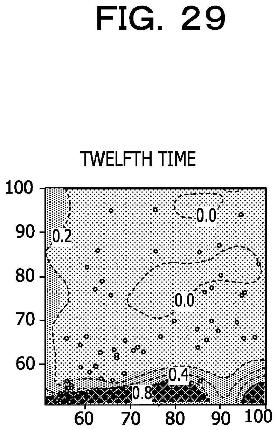

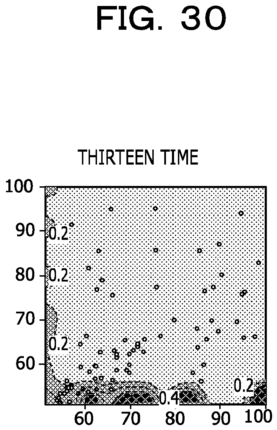

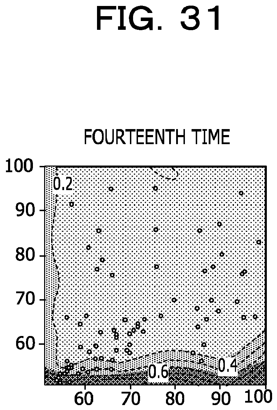

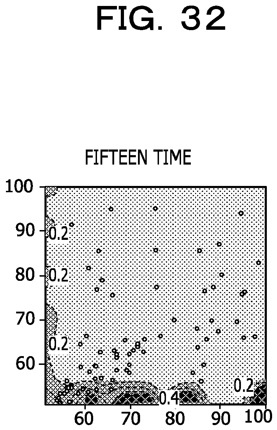

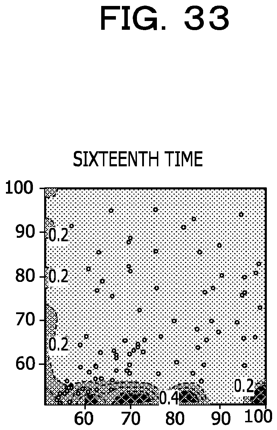

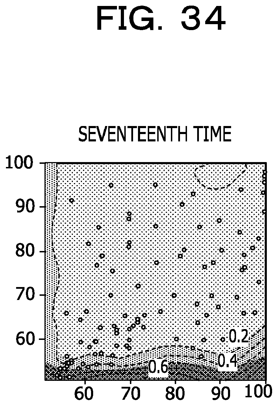

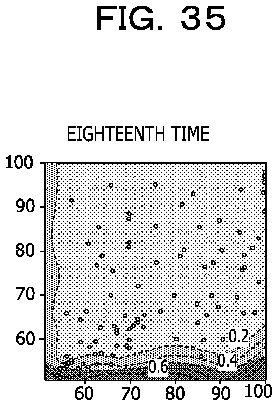

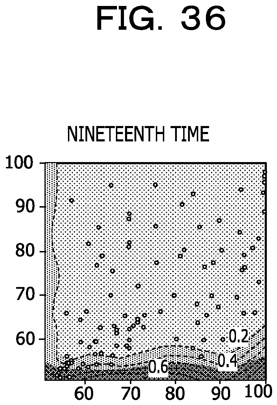

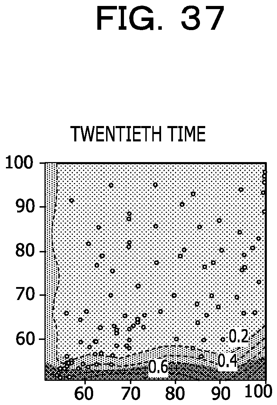

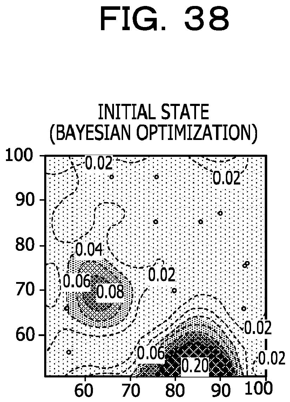

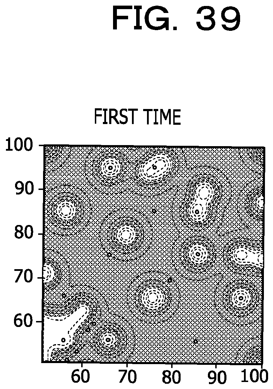

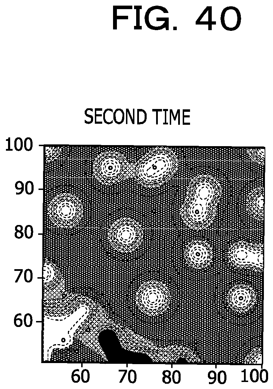

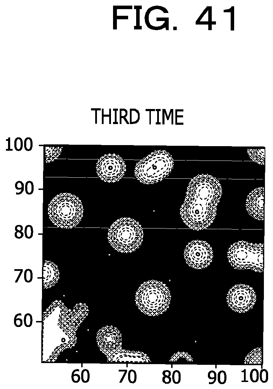

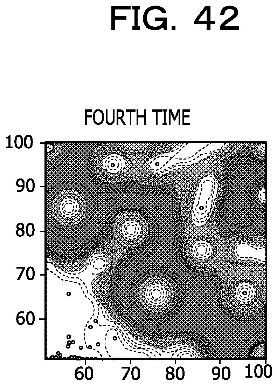

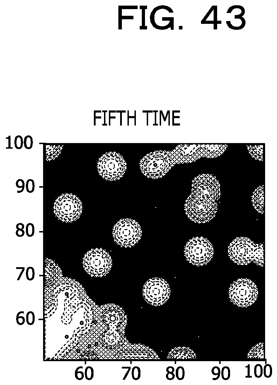

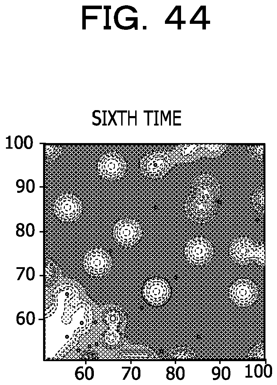

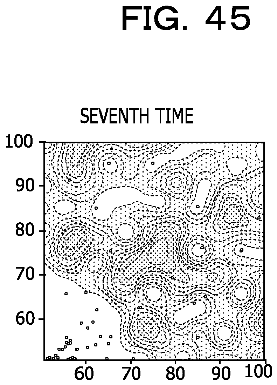

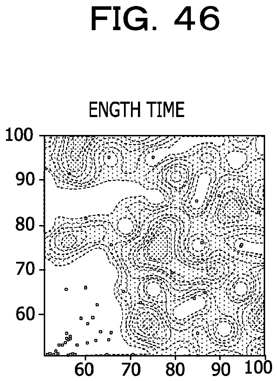

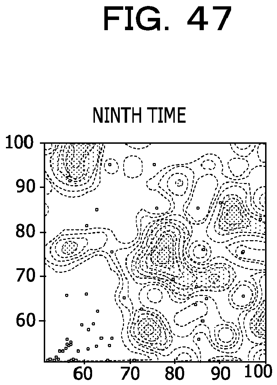

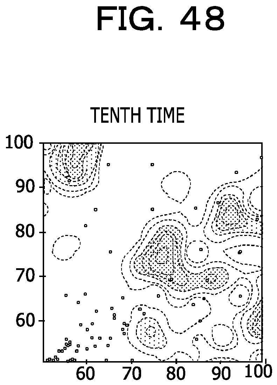

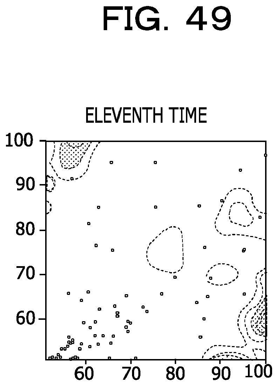

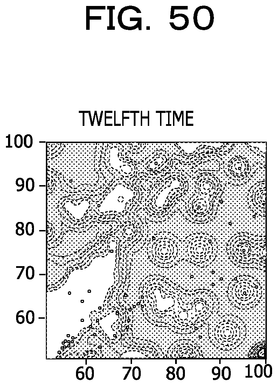

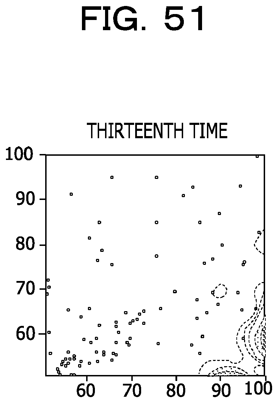

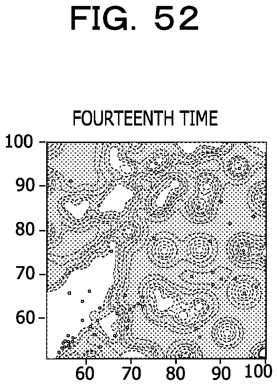

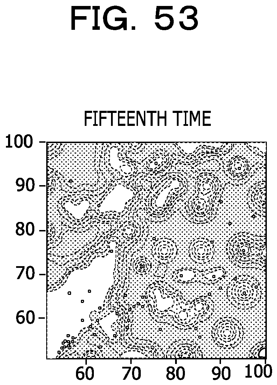

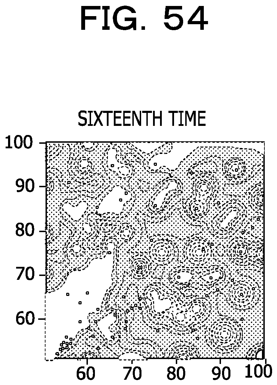

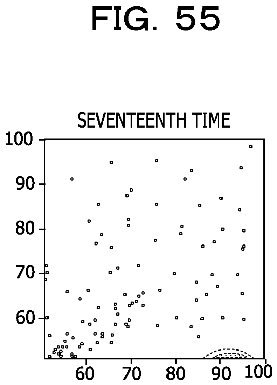

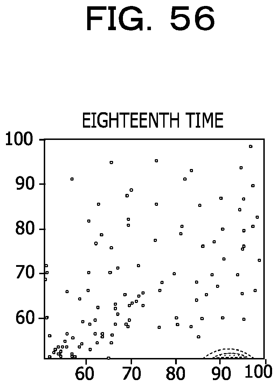

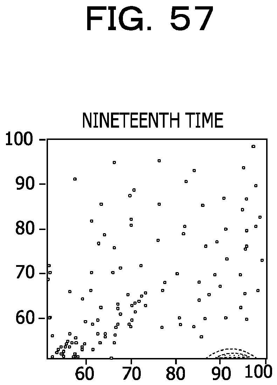

Here, FIGs. 17 to 37 illustrate examples of the distribution of the mean and the learning data in the Gaussian process regression model for the objective function $F_1$ in each multi-objective optimization. Similarly, FIGs. 38 to 58 illustrate the distribution of the variance and the learning data in the Gaussian process regression model for the objective function $F_1$ in each multi-objective optimization.

Note that, in these drawings, the horizontal axis represents the value of the objective function $F_1$ for minimizing the average magnetic flux density in the target region, and the vertical axis represents the value of the objective function $F_2$ for minimizing the area of the magnetic material forming the magnetic shield. Here, in these drawings, a dark-colored (close to black) part represents a large variance value, and a light-colored (close to white) part represents a small mean or variance value. Furthermore, the scale of the density of the values in these drawings is similar to that illustrated in FIGs. 9A to 10B.

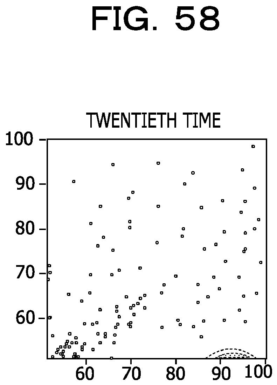

For example, as illustrated in FIGs. 38 to 58, in each multi-objective optimization, it can be seen that the variance in the Gaussian process regression model changes as the learning data is added and the Gaussian process regression model is updated. Furthermore, as illustrated in FIG. 58, the variance in the finally obtained Gaussian process regression model is a small value as a whole, and it can be seen that the Gaussian process regression model is highly accurate.

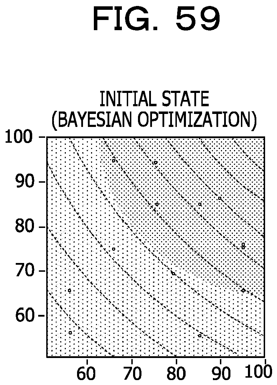

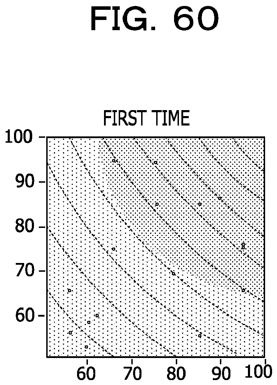

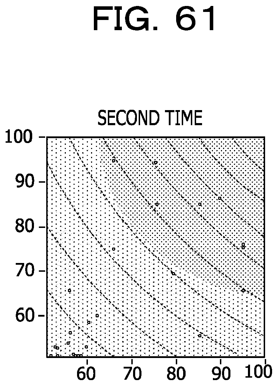

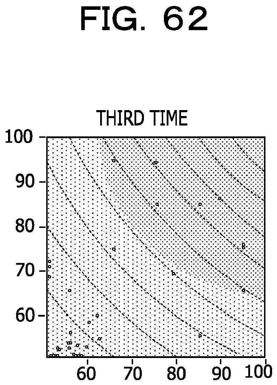

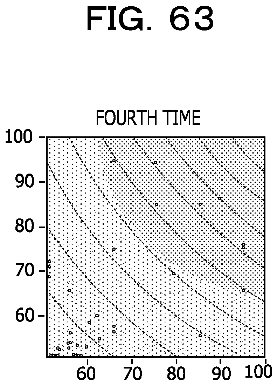

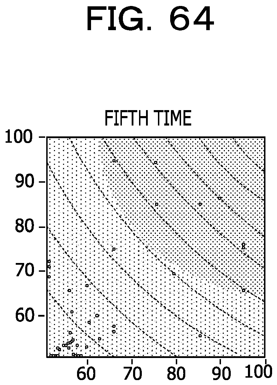

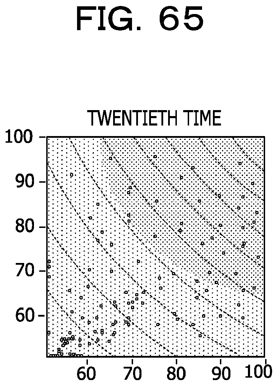

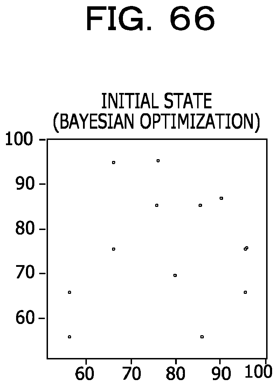

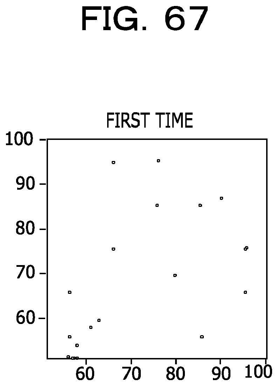

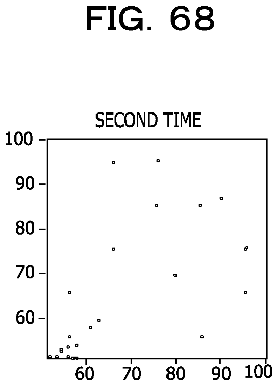

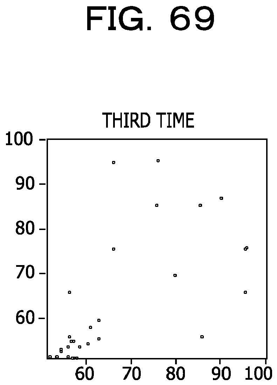

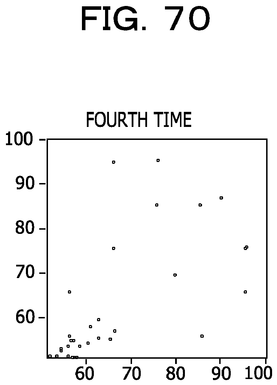

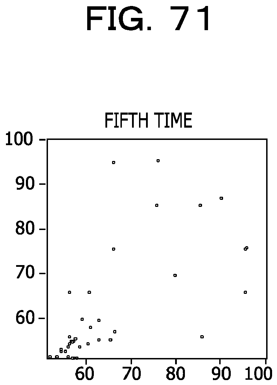

Furthermore, FIGs. 59 to 65 illustrate the distribution of the mean and the learning data in the Gaussian process regression model for the objective function $F_2$ in each multi-objective optimization. Similarly, FIGs. 66 to 72 illustrate the distribution of the variance and the learning data in the Gaussian process regression model for the objective function $F_2$ in each multi-objective optimization.

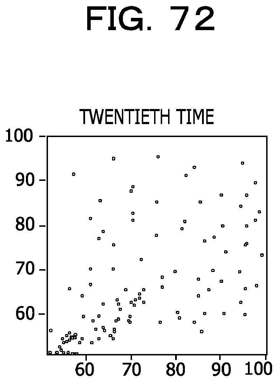

For example, as illustrated in FIG. 72, the variance in the finally obtained Gaussian process regression model is a small value as a whole, and it can be seen that the Gaussian process regression model is highly accurate.

<Evaluation of Result of Multi-objective Optimization>

In the present embodiment, arbitrary seven points in the finally obtained Pareto solution set (twentieth generation) have been selected and compared with the results of the simulations by the finite element method (FEM).

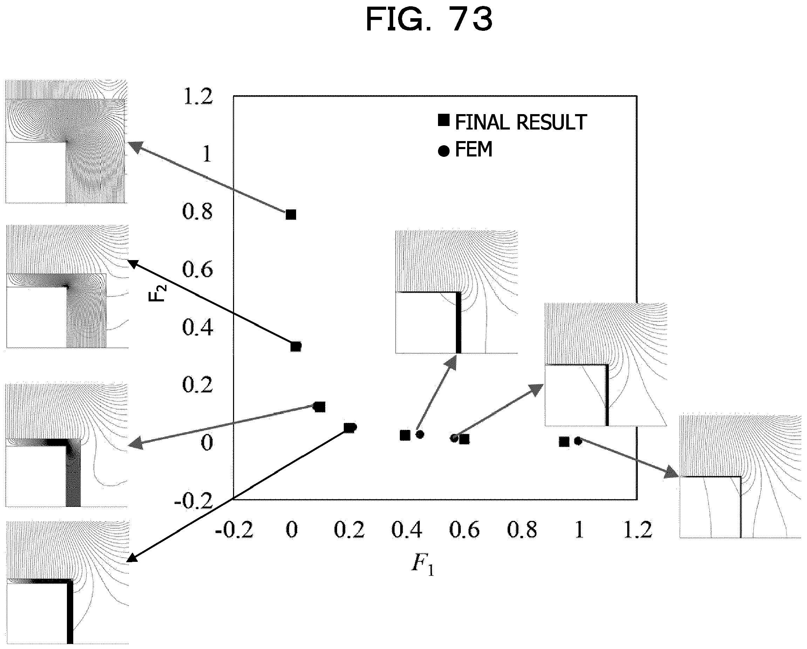

FIG. 73 illustrates an example of correspondence between arbitrary seven points (seven Pareto solutions) in a finally obtained Pareto solution set and results of simulation by a finite element method. In FIG. 73, the end of an arrow extending from the result of each simulation illustrates the simulation result in each calculation system corresponding to FIG. 8, and a curve in the simulation result means a line of magnetic force.

As illustrated in FIG. 73, arbitrary seven points (final results) in the finally obtained Pareto solution set and the actual values (FEM) obtained by the simulations by the finite element method have shown good coincidence. From the result, it has been confirmed that an accurate Pareto solution has been obtained for all the points.

Moreover, the Pareto solution set finally obtained in the present embodiment (the number of executed simulations is 173 in total) and the Pareto solution set obtained by executing 25,000 simulations (250 generations $\times$ 100 individuals) by the existing technique have been compared.

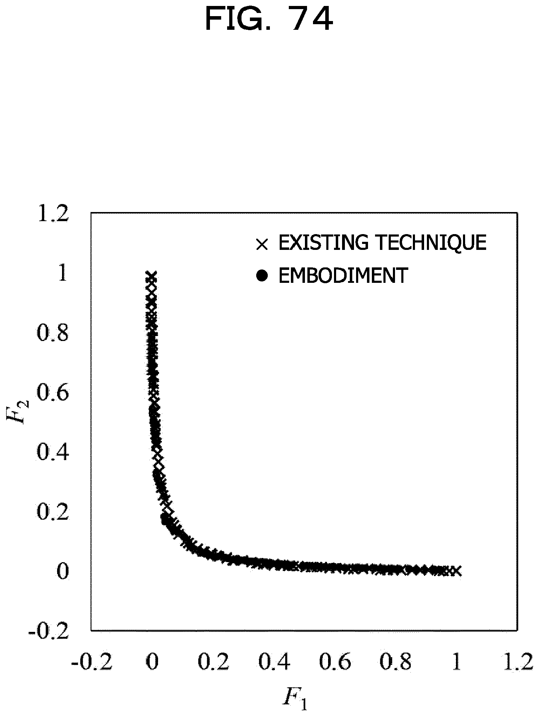

FIG. 74 illustrates an example of correspondence between the Pareto solution set obtained by 173 simulations in the embodiment and the Pareto solution set obtained by 25,000 simulations in the existing technique. In FIG. 74, the horizontal axis represents the value of the objective function $F_1$ for minimizing the average magnetic flux density in the target region, and the vertical axis represents the value of the objective function $F_2$ for minimizing the area of the magnetic material forming the magnetic shield.

As illustrated in FIG. 74, the Pareto solution set obtained by 173 simulations in the embodiment and the Pareto solution set obtained by 25,000 simulations in the existing technique have had almost the same shape (distribution). From the result, it has been confirmed that in the present embodiment, the Pareto solution set with high accuracy can be obtained while significantly reducing the number of executed simulations from 25,000 to 173.

**Claims**

1. An information processing apparatus that performs multi-objective optimization, the information processing apparatus comprising:
a model update unit configured to update a model created based on data for each of a plurality of objective functions regarding the multi-objective optimization, using a Pareto solution that has a relatively large variance of values of the objective function in the model in a Pareto solution set obtained from the model by a multi-objective optimization method.

2. The information processing apparatus according to claim 1, wherein the model update unit updates the model until there is no Pareto solution that has a larger variance than a threshold value in the updated Pareto solution set obtained by the multi-objective optimization method based on the model updated using the Pareto solution that has a relatively large variance in the Pareto solution set.

3. The information processing apparatus according to claim 1 or 2, wherein
the model update unit performs an analysis using the Pareto solution that has a relatively large variance in the Pareto solution set and adds a result of the analysis to the data to update the model.

4. The information processing apparatus according to any one of claims 1 to 3, wherein the multi-objective optimization method is a multi-objective genetic algorithm.

5. The information processing apparatus according to any one of claims 1 to 4, wherein the multi-objective optimization is optimization of a magnetic shield.

6. An information processing method for causing a computer to perform multi-objective optimization, the information processing method comprising:

obtaining, by a multi-objective optimization method, a Pareto solution set from a model generated based on data for each of a plurality of objective functions regarding the multi-objective optimization; and
updating the model by using a Pareto solution from among the obtained Pareto solution set, the Pareto solution being a solution that has a relatively large variance of values of the objective function in the model.

7. An information processing program comprising instructions for causing a computer to perform multi-objective optimization, the instructions comprising:

obtaining, by a multi-objective optimization method, a Pareto solution set from a model generated based on data for each of a plurality of objective functions regarding the multi-objective optimization;
updating the model by using a Pareto solution from among the obtained Pareto solution set, the Pareto solution being a solution that has a relatively large variance of values of the objective function in the model.

# FIG. 1

# FIG. 2

START

GENERATE INITIAL POPULATION ~ S101

EVALUATE EACH INDIVIDUAL IN INITIAL POPULATION ~ S102

SELECT PLURALITY OF INDIVIDUALS TO SERVE AS PARENT INDIVIDUALS FROM INDIVIDUALS IN POPULATION ~ S103

CROSS SELECTED POPULATION TO GENERATE CHILD POPULATION ~ S104

MUTATE SOME INDIVIDUALS IN CHILD POPULATION ~ S105

EVALUATE EACH INDIVIDUAL IN CHILD POPULATION ~ S106

CULL INDIVIDUALS WITH LOW EVALUATION FROM CHILD POPULATION ~ S107

NO — HAS NUMBER OF GENERATIONS OF CHILD POPULATION REACHED UPPER LIMIT? S108

YES

END

# FIG. 3

# FIG. 4

100

## INFORMATION PROCESSING APPARATUS

| 101 | 102 | 103 | 104 |
|---|---|---|---|
| CONTROL UNIT | MAIN STORAGE DEVICE | AUXILIARY STORAGE DEVICE | I/O INTERFACE |

109

| 105 | 106 | 107 | 108 |
|---|---|---|---|
| COMMUNICATION INTERFACE | INPUT DEVICE | OUTPUT DEVICE | DISPLAY DEVICE |

# FIG. 5

100

200

| 101a | 102 | 103 | 104 |
|------|-----|-----|-----|
| CONTROL UNIT | MAIN STORAGE DEVICE | AUXILIARY STORAGE DEVICE | I/O INTERFACE |

109

| 105 | 106 | 107 | 108 |
|-----|-----|-----|-----|
| COMMUNICATION INTERFACE | INPUT DEVICE | OUTPUT DEVICE | DISPLAY DEVICE |

400

300

| 101b | 102 |
|------|-----|
| CONTROL UNIT | MAIN STORAGE DEVICE |

109

| 105 | 103 |
|-----|-----|
| COMMUNICATION INTERFACE | AUXILIARY STORAGE DEVICE |

27

# FIG. 6

INFORMATION PROCESSING APPARATUS ⌇100

COMMUNICATION FUNCTION UNIT ⌇120

INPUT FUNCTION UNIT ⌇130

OUTPUT FUNCTION UNIT ⌇140

DISPLAY FUNCTION UNIT ⌇150

STORAGE FUNCTION UNIT ⌇160

CONTROL FUNCTION UNIT ⌇170

MODEL UPDATE UNIT ⌇171

# FIG. 7

START

S201
DEFINE PLURALITY OF OBJECTIVE FUNCTIONS REGARDING MULTI-OBJECTIVE OPTIMIZATION

S202
CREATE GAUSSIAN PROCESS REGRESSION MODEL CORRESPONDING TO EACH OF OBJECTIVE FUNCTIONS USING BAYESIAN OPTIMIZATION

S203
PERFORM MULTI-OBJECTIVE OPTIMIZATION BY MULTI-OBJECTIVE GENETIC ALGORITHM USING GAUSSIAN PROCESS REGRESSION MODEL AND OBTAIN PARETO SOLUTION SET

S204
SPECIFY VARIANCE OF PARETO SOLUTION IN PARETO SOLUTION SET BY EACH GAUSSIAN PROCESS REGRESSION MODEL

S205
SPECIFY PARETO SOLUTION IN WHICH SUM OF VARIANCES SPECIFIED BY GAUSSIAN PROCESS MODELS IS LARGER THAN THRESHOLD VALUE AS RECOMMENDATION POINT

S208
ADD RESULT OF SIMULATION TO LEARNING DATA TO UPDATE GAUSSIAN PROCESS REGRESSION MODEL

S207
EXECUTE SIMULATION FOR RECOMMENDATION POINT

S206
IS THERE PARETO SOLUTION SPECIFIED AS RECOMMENDATION POINT?

YES

NO

S209
OUTPUT INFORMATION OF PARETO SOLUTION SET

END

29

# FIG. 8

FIG. 9A

FIG. 9B

## FIG. 10A

## FIG. 10B

# FIG. 11

# FIG. 12

# FIG. 13

# FIG. 14

# FIG. 15

# FIG. 16

# FIG. 17

INITIAL STATE
(BAYESIAN OPTIMIZATION)

# FIG. 18

FIRST TIME

# FIG. 19

SECOND TIME

# FIG. 20

THIRD TIME

# FIG. 21

FOURTH TIME

# FIG. 22

FIFTH TIME

# FIG. 23

SIXTH TIME

# FIG. 24

SEVENTH TIME

# FIG. 25

EIGHTH TIME

# FIG. 26

NINTH TIME

# FIG. 27

TENTH TIME

# FIG. 28

ELEVENTH TIME

# FIG. 29

TWELFTH TIME

# FIG. 30

THIRTEEN TIME

# FIG. 31

FOURTEENTH TIME

# FIG. 32

FIFTEEN TIME

# FIG. 33

SIXTEENTH TIME

# FIG. 34

SEVENTEENTH TIME

# FIG. 35

EIGHTEENTH TIME

# FIG. 36

NINETEENTH TIME

# FIG. 37

TWENTIETH TIME

# FIG. 38

**INITIAL STATE
(BAYESIAN OPTIMIZATION)**

# FIG. 39

FIRST TIME

# FIG. 40

SECOND TIME

# FIG. 41

THIRD TIME

# FIG. 42

FOURTH TIME

# FIG. 43

FIFTH TIME

# FIG. 44

SIXTH TIME

# FIG. 45

SEVENTH TIME

# FIG. 46

ENGTH TIME

# FIG. 47

NINTH TIME

# FIG. 48

TENTH TIME

# FIG. 49

ELEVENTH TIME

# FIG. 50

TWELFTH TIME

# FIG. 51

THIRTEENTH TIME

# FIG. 52

FOURTEENTH TIME

# FIG. 53

FIFTEENTH TIME

# FIG. 54

SIXTEENTH TIME

# FIG. 55

**SEVENTEENTH TIME**

# FIG. 56

EIGHTEENTH TIME

# FIG. 57

NINETEENTH TIME

# FIG. 58

TWENTIETH TIME

# FIG. 59

INITIAL STATE
(BAYESIAN OPTIMIZATION)

# FIG. 60

FIRST TIME

# FIG. 61

SECOND TIME

# FIG. 62

THIRD TIME

# FIG. 63

FOURTH TIME

# FIG. 64

FIFTH TIME

# FIG. 65

TWENTIETH TIME

# FIG. 66

INITIAL STATE
(BAYESIAN OPTIMIZATION)

# FIG. 67

FIRST TIME

# FIG. 68

SECOND TIME

# FIG. 69

THIRD TIME

# FIG. 70

FOURTH TIME

# FIG. 71

FIFTH TIME

# FIG. 72

TWENTIETH TIME

FIG. 73

# FIG. 74

Europäisches
Patentamt

European
Patent Office

Office européen
des brevets

# EUROPEAN SEARCH REPORT

**Application Number**

EP 21 19 9102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | KALYANMOY DEB ET AL: "A Fast and Elitist Multiobjective Genetic Algorithm: NSGA-II", IEEE TRANSACTIONS ON EVOLUTIONARY COMPUTATION, IEEE SERVICE CENTER, NEW YORK, NY, US, vol. 6, no. 2, 1 April 2002 (2002-04-01), pages 182-197, XP011072884, ISSN: 1089-778X, DOI: 10.1109/4235.996017 * the whole document * | 1-7 | INV. G06N3/12 |
| X,D | JP 2020 052737 A (KOBE STEEL LTD) 2 April 2020 (2020-04-02) * paragraph [0008] - paragraph [0082] * * figures 1-5 * | 1-7 | |
| A | US 2008/215512 A1 (NARZISI GIUSEPPE [IT] ET AL) 4 September 2008 (2008-09-04) * paragraph [0017] - paragraph [0076] * * figure 1 * | 2 | |
| A | CN 111 738 505 A (INDUSTRIAL & COMMERCIAL BANK OF CHINA CO LTD) 2 October 2020 (2020-10-02) * the whole document * | 2 | **TECHNICAL FIELDS SEARCHED (IPC)**<br><br>G06N |

The present search report has been drawn up for all claims

| Place of search | Date of completion of the search | Examiner |
|---|---|---|
| The Hague | 1 April 2022 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 9102

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2022

| Patent document cited in search report | Publication date | Patent family member(s) | Publication date |
|---|---|---|---|
| JP 2020052737 A | 02-04-2020 | NONE | |
| US 2008215512 A1 | 04-09-2008 | NONE | |
| CN 111738505 A | 02-10-2020 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020052737 A

**Non-patent literature cited in the description**

- **K. DEB ; A. PRATAP ; S. AGARWAL ; T. ME-YARIVAN.** A fast and elitist multiobjective genetic algorithm: NSGA-II,. *IEEE Transactions on Evolutionary Computation,* April 2002, vol. 6 (2), 182-197
- **AKAHO ; SHOTARO.** Introduction to Gaussian Process Regression. *System/Control/Information,* 2018, vol. 62 (10), 390-395
- **M. D. MCKAY ; R. J. BECKMAN ; W. J. CONOVER.** A Comparison of Three Methods for Selecting Values of Input Variables in the Analysis of Output From a Computer Code. *Technometrics,* February 2000, vol. 42 (1), 55-61
- **FELIX-ANTOINE FORTIN ; FRANCOIS-MICHEL DE RAINVILLE ; MARC-ANDRE GARDNER ; MARC PARIZEAU ; CHRISTIAN GAGNE.** DEAP: Evolutionary Algorithms Made Easy. *Journal of Machine Learning Research,* 13 July 2012, 2171-2175
- **DAICHI MOCHIHASHI ; SHIGEYUKI OHBA.** Gaussian Process Regression and Machine Learning. *Machine Learning Professional Series, Kodansha,* 2019
- **AKAHO, SHOTARO.** Introduction to Gaussian Process Regression. *System/Control/Information,* 2018, vol. 62 (10), 390-395